Europäisches Patentamt

European Patent Office

Office européen des brevets

(19)

(11) **EP 0 336 524 B2**

(12) NEW EUROPEAN PATENT SPECIFICATION

(45) Date of publication and mention
of the opposition decision:
**13.01.1999 Bulletin 1999/02**

(45) Mention of the grant of the patent:
**05.01.1994 Bulletin 1994/01**

(21) Application number: 89201723.7

(22) Date of filing: **22.09.1983**

(51) Int Cl.⁶: **H04M 3/50**, H04Q 3/62

(54) **Electronic audio communication system with user controlled message address**

System zur elektronischen Übermittlung von Audiosignalen mit Nachrichtenadresssteuerung durch den Anwender

Système de communication électronique de signaux audio dans lequel l'adresse de message est sélectionnée par l'utilisateur

(84) Designated Contracting States:
**AT BE CH DE FR GB IT LI LU NL SE**

(30) Priority: **29.09.1982 US 427640
29.09.1982 US 427687
29.09.1982 US 428161**

(43) Date of publication of application:
**11.10.1989 Bulletin 1989/41**

(62) Document number(s) of the earlier application(s) in accordance with Art. 76 EPC:
**83305634.4 / 0 106 575**

(73) Proprietor: **VMX INC.
San Jose, California 95131 (US)**

(72) Inventors:
• **Matthews, Gordon Houston
Austin Texas 78735 (US)**
• **Tansil, Thomas Beryl
Dallas Texas 75225 (US)**
• **Fannin, Michael Lowe
Dallas Texas 75230 (US)**

(74) Representative: **Schmidt, Steffen J. et al
Patentanwalt Steffen J. Schmidt,
Kazmairstrasse 26,
Postfach 12 14 27
80036 München (DE)**

(56) References cited:
**EP-A- 0 029 938**

• **1982 INTERNATIONAL ZURICH SEMINAR ON DIGITAL COMMUNICATIONS, Zurich, 9th - 11th March 1982, pages 63-67; A.J. LINCOLN: "User interface design for digital voice mail systems"**
• **WESCON CONFERENCE RECORD, vol. 25, September 1981, pages 1-8, El Segundo, CA, US; L.E. BERGERON et al.: "Voice store and forward for the automated office"**
• **1981 International Symposium on Computer Message Systems, Proceedings of the I.F.I.P. TC-6 R.P. Uhlig, Chairman Program Committee North-Holland Publishing Company, I.F.I.P. 1981, pages 17-28 and 199-220.**
• **"The IBM Audio Distribution System" from J. Richards and S. Boies, Midcon/81 Conference Record, Chicago, USA, 10-12. November 1981, pages 18/4/1-6.**

**Description**

TECHNICAL FIELD

This invention relates to telecommunication systems, and more particularly to an electronic digital signal processor controlled telecommunication system for the deposit, storage and delivery of audio messages that affords the user an additional user controlled message address.

BACKGROUND ART

In response to the problems encountered in improving the communications between people desiring rapid and efficient delivery of verbal messages in the business community, electronic message systems that store audio messages in a digital form have very recently been developed. These systems allow a caller to store the digital form of his message for later retrieval by the person he is directing the message to. Even though these systems greatly increase the efficiency of communication between parties, the need for even more versatility in communication ability still exists. For example, these voice storage systems that are available to a select group of callers such as the employees of a corporation which may have many different branches connected to different systems. In order to increase the versatility of a particular system, it is necessary that they be able to communicate with each other through any means available. In order to accomplish this, the systems that desire to communicate with each other must coordinate their respective functions such as receiving or transmitting information over a common transmitting medium.

The simultaneous transmission and reception of voice information for intended recipients over a common transmitting medium can be a difficult task to accomplish for a machine. This is due to the fact that a great deal of information traffic is present along a common data link. One of the most commonly used means of communicating between two computer systems in a high-speed digital data link that utilizes techniques such as time sharing. These types of data links enable two computers to converse with one another if the proper connections are made. However, these data links are not always available to a computer and, as such, it is not always efficient to utilize this type of data link for transmitting digitized message data. Sometimes the data link is either busy or not available for system use. Therefore, there exists a need for establishing a communication link between two voice message systems with the requisite versatility that does not require the sole use of a digital data link.

The 1982 International Zurich Seminar on Digital communications, 9-11 March, 1982. Pages 63-67 describes a voice message system which can identify the data and time a message is deposited in a voice mail box. However, this system does not give automatic identification of a calling party because the caller must place such identification information in the mail box at the time a message is left. Depending on the point at which the identification information is left, a message recipient must listen to at least a part, if not all of the message to identify the caller.

The article "The IBM Audio Distribution System" by John T. Richards and Stephan J. Boies, Proceedings of Midcon/81 Conference, 1981, USA, pages 1 - 6, discloses an audio distribution system in which voice messages may be exchanged. The user is informed by the system of the fact that new messages have arrived and the names(s) of the sender(s) is/are played out in this situation. The use may furthermore review information about a message, e.g. the sender, time of send, or co-recipients, by pressing a key on the telephone keypad.

The present invention provides an electronic communication message system for being coupled to a private branch exchange or central office, for receiving, storing and forwarding information from a user's telephone facilities comprising the features of claim 1.

Preferably, the unique analog identifier comprises the name of the originating user voiced by the originating user.

The system preferably includes means characterized in claim 3.

The system also preferably includes means characterized in claim 4.

Preferably, the system of claim 1 is further characterized by the features of claim 5.

In this case, the system preferably includes means for altering the stored unique code by the user associated with the unique code through analog signals transmitted from the user's telephone facility.

The invention further provides an electronic communication message system for connection to a private branch exchange telephone facility for use in facilitating communications between users of the private branch exchange comprising the features of claim 7.

Further features and advantages of the invention will become apparent from the following description of a preferred embodiment of the invention.

BRIEF DESCRIPTION OF DRAWINGS

Other objects and advantages of the present invention will be apparent from the following Detailed Description of the preferred embodiments thereof and from the attached Drawings of which:

FIGURE 1 illustrates a Voice Message System connected with the multiple private exchanges of a customer and the central office of the telephone company;

FIGURE 2 illustrates a network of Voice Message Systems;

FIGURE 3 is a block diagram of the Voice Message System of FIGURES 1 and 2;

FIGURE 4 is a block diagram view of the call processor subsystem of the Voice Message System of FIGURE 3;

FIGURE 5 is a block diagram view of the communication port interface, port driver modules and Codecs connecting the telephone handsets (of the call processor subsystem of FIGURE 4);

FIGURE 6 is a block diagram view of the administrative subsystem for the Voice Message System of FIGURE 3;

FIGURE 7 is a block diagram view of the storage subsystem of the Voice Message System of FIGURE 3;

FIGURE 8 is a block diagram view of the port driver subsystem of the communication port interface of FIGURE 5;

FIGURE 9 is a block diagram view of the Codec of the port driver subsystem of FIGURE 8;

FIGURE 10 is a flow chart of the message deposit function of the voice message system;

FIGURE 11 is the flow chart of the process user-I.D. subroutine of the message deposit function of the voice message system;

FIGURE 12 is the flow chart of the process an addressee subroutine of the message deposit function of the voice message system;

FIGURE 13 is a flow chart of the record voice message subroutine of the message deposit function of the voice message system;

FIGURE 14 is a flow chart of the message delivery function of the voice message system;

FIGURE 15 is a flow chart of the process user I.D. subroutine of the message delivery function of the voice message system;

FIGURE 16 is a flow chart of the play voice message subroutine of the message delivery function of the voice message system;

FIGURE 17 is a flow chart of the redirect special function code subroutine of the message delivery function of the voice message system;

FIGURE 18 is a flow chart of the reply special function code of the message delivery function of the voice message system;

FIGURE 19 is a flow chart of the save special function code subroutine of the message delivery function of the voice message system;

FIGURE 20 is a flow chart of the inquiry function of the voice message system;

FIGURE 21 is a visual Table of Contents of all the programs in the VMS system software;

FIGURE 22 illustrates the control and data flow for the programs running in the call processors;

FIGURE 23 illustrates the control and data flow for the programs residing in the master and slave processors of the administrative subsystem;

FIGURES 24a to 24c are the schematic drawings of the Codec of FIGURE 9;

FIGURE 25 is a flow chart of an alternate embodiment of the message delivery function;

FIGURE 26 is a flow chart of the message receipt subroutine in the flow chart of FIGURE 25;

FIGURE 27 is a flow chart of the send message subroutine in the flow chart of FIGURE 25;

FIGURE 28 is a flow chart of the redirect feature; and

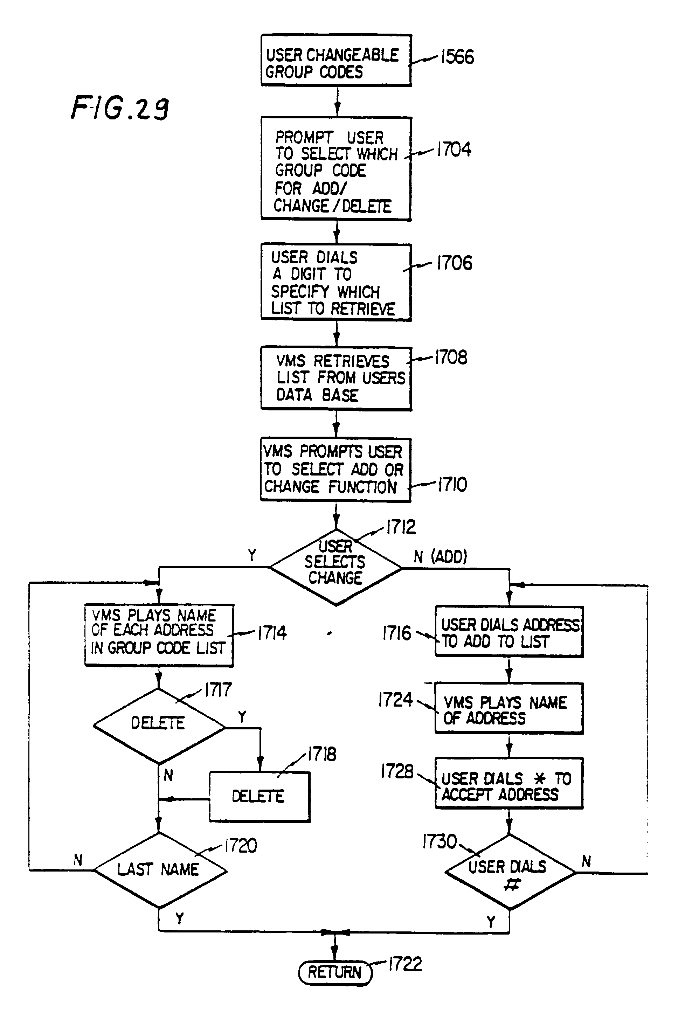

FIGURE 29 is a flow chart of the user changeable group codes feature.

## DESCRIPTION OF PREFERRED EMBODIMENT

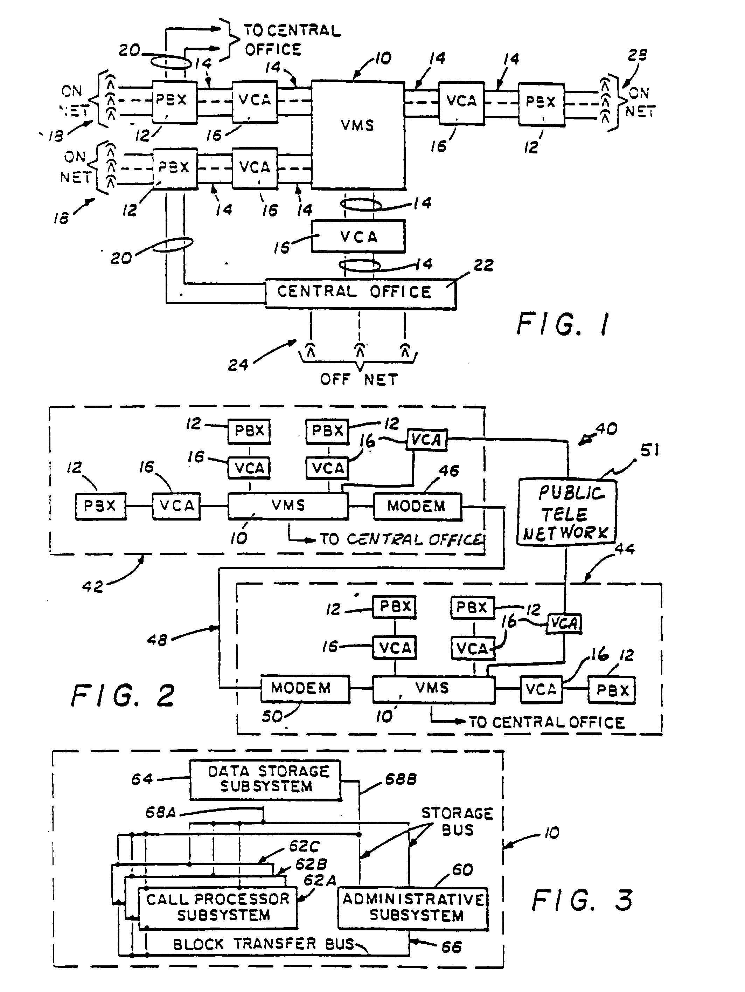

Referring to FIGURE 1, a Voice Message System advanced verbal communication system (hereinafter "VMS") of the present invention is generally identified by the reference numeral 10. ("Voice Message System" is a trademark of Electronic Communication Systems, Inc.) The VMS system 10 is illustrated connected with a user's telephone communications network. The VMS system 10 is not limited to the particular telephone communications network illustrated in FIGURE 1, as the present invention is capable of providing an improved communications network for a variety of user's telephone systems.

The telephone communications network illustrated in FIGURE 1 includes multiple Private Branch Exchanges 12 (hereinafter "PBX 12") interconnected by tie lines 14 through Voice Connecting Arrangements (hereinafter "VCA") 16 to the VMS 10. The VMS 10 can also be connected to a PBX 12 with station lines. The VCA unit is supplied by the telephone company pursuant to Federal Communication Commission's tariff regulation to provide a line of demarcation between a private user's equipment and the telephone company's equipment. In addition to representing what are referred to as Private Branch Exchanges the term "PBX" also includes but is not limited to PABX (Private Automatic Branch Exchange), EPABX (Electronic Private Automatic Branch Exchange) and CBX (Computerized Branch Exchange), in addition to various off premises switching systems.

The user's telephones 18 connected to the PBX's 12 have access to the VMS 10 and are generally referred to as being on the network or "ON NET". The features of the VMS 10 may be utilized by a small customer with a single PBX 12 or by much larger customers having multiple PBX's 12 interfaced with a single VMS 10. Of course, the PBX's 12 of a large corporate customer may be separated and located in distant physical facilities. Remotely located PBX's 12 may be interconnected to a central VMS 10 by other means than the tie lines 14, e.g., they could be connected by a microwave relay system.

The user's PBX's 12 are also connected through telephone lines 20 to a central office 22, of the telephone company. In addition, the central office 22 is interconnected through tie lines 14 and VCA 16 to the VMS 10. The VMS 10 can also be connected to the central office 22 through central office trunks. Telephones 24 outside the customer's own telephone communications network or "OFF NET" allow a user access to the improved communication capabilities provided by the VMS 10.

Referring to FIGURE 2, a first VMS 10 is interconnected to a user's telephone communications network as illustrated in FIGURE 1 and described above. The first VMS 10 is interconnected to a second VMS 10 to form a network of VMS systems 40. The first VMS 10 interconnected with its user's telephone communication equipment comprises a first node 42 of network 40, while the second VMS 10 with its user's telephone communication equipment comprises with the second node 44 of network 40. The first VMS 10 is interconnected through a MODEM 46 for modulating the communications information from the first node 42 for transmission via the transmissions link 48 to a MODEM 50. The MODEM 50 demodulates the information for use by the second VMS 10 of the second node 44. The transmission link 48 could comprise a microwave relay system for connecting nodes 42 and 44 of the VMS network 40. Such a transmission link 48 could be transmitted through a satellite communications system to provide an interconnection between distant VMS systems 10. The VMS systems are also interconnected through a public telephone network 44 for transmission of the data in analog format. Of course, the number and arrangement of interconnected VMS systems 10 are not limited to the arrangement of VMS network 40 of FIGURE 2.

Referring to FIGURE 3, the VMS 10 of FIGURE 1 includes the following subsystems: an administrative subsystem 60, call processor subsystems 62A-62C, and a data storage subsystem 64. There is only one administrative system 60 and data storage subsystem 64 for each VMS system 10, but there may be multiple call processor subsystems 62A-62C. The number of call processor subsystems 62A-62C required is a function of the number of telephone lines interfacing with the VMS 10. Thus, a VMS 10 may have one call processor subsystem 62A or any number of such subsystems. While there is one data storage system 64 for the VMS 10, the size of the data storage system 64 may vary, depending upon the number of disk files required for operation of the VMS 10. The data storage subsystem 64 functions as the storage medium for audio messages in the system. A message deposited from a caller is stored in the VMS system 10, and the message is later delivered to the addressee. Instructional messages are also stored in the data storage system 64 to guide the user in using the VMS 10.

A block transfer bus 66 allows each call processor subsystem 62A-62C to be connected to the administrative subsystem 60, as well as allowing each of the call processor subsystems 62A-62C to communicate with one another.

Data storage buses 68A-68B connect the administrative subsystem 60, the call processor subsystem 62A-62C and the data storage subsystem 64. The administrative subsystem 60 and each of the call processor subsystems 62A-62C have access to each of the data storage buses 68A-68B. The two data storage buses 68A-68B serve two functions. First, it provides redundancy in the VMS system 10, so that, if data storage bus 68A misfunctions, data storage bus 68B allows the VMS 10 to continue to operate. Secondly, when both of the data storage buses 68A-68B are functioning, it doubles the bandwidth of the data to be transmitted between the data storage system 64 and the call processor subsystems 62A-C and administrative subsystem 60.

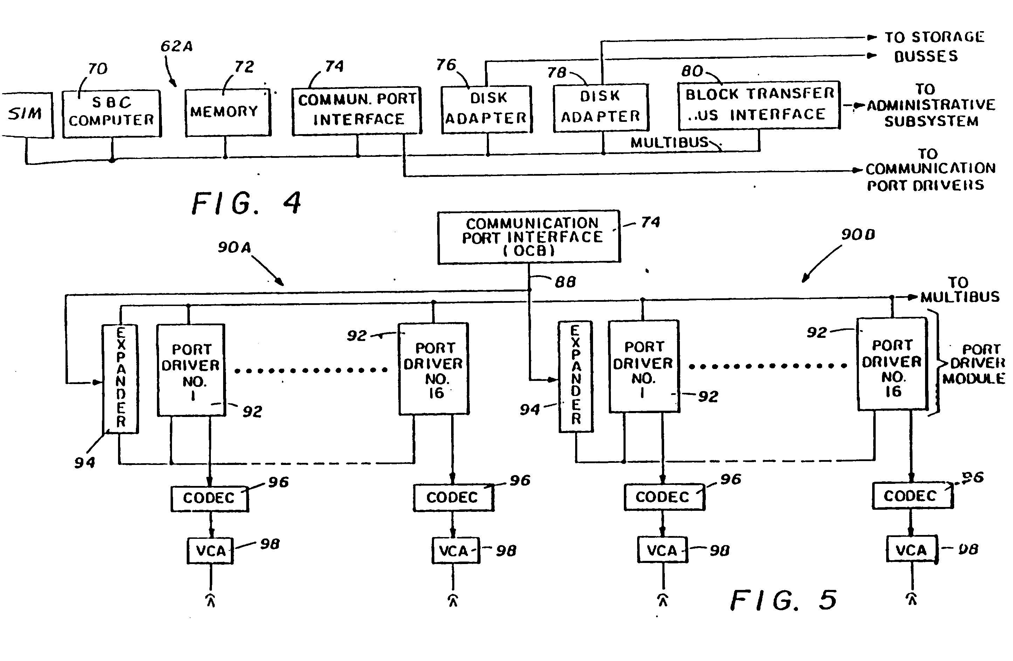

Referring to FIGURE 4, the call processor subsystem 62A is illustrated in block diagram form. A single board computer 70 contains a microprocessor, some memory storage, and some input/output device interfaces. The single board computer 70 may be implemented by Intel's single board computer, from Intel, Model Number 80/30. The Intel 80/30 computer includes an 8085 microprocessor, a 16K RAM, 8K ROM, as well as some input/output device interfaces.

A call processor memory 72 provides memory for the call processor subsystem 62A and may be implemented by one or more individual boards containing RAM memory. A single board providing 64K bytes of RAM memory may be utilized as the call processor memory unit 72 and is commercially available from Intel as Model No. SVC064. A communications port interface 74 provides access to the communication port modules 90 of FIGURE 5 described hereinbelow. Two identical disk adapters 76 and 78 interconnect with the data storage subsystem 64 of FIGURE 3 through data storages buses 68A and 68B. Finally, a block transfer bus interface 80 is a hardware device required to interconnect with the block transfer bus 66 of FIGURE 3.

The communication port interface 74, disk adapters 76 and 78, and the block transfer bus interface 80 are all implemented with an identical electronic unit, identified as a Universal Control Board. A Universal Control Board contains as Intel 8085 microprocessor, a RAM memory device, (approximately 500 bytes), a ROM memory device (approximately 2K-4K bytes), and a digital data bus interface. A Universal Control Board's function is determined by the program controlling the microprocessor. The schematic of a Universal Control Board is illustrated in FIGURES 10a-10n and described hereinbelow.

In addition to the memory provided in each of the Universal Control Boards, the communication port interface 74, disk adapters 76 and 78 and block transfer bus interface 80 all have access to the memory 72 of the call processor subsystem 62A. Thus, the microprocessors of these Universal Control Boards communicate with the single board computer 70 through the shared memory unit 72.

Referring now to FIGURE 5, the communication port interface 74 of FIGURE 4 interfaces with the communication port driver modules 90A-B through a communications port digital data bus 88. The communication port driver modules 90A-90B are identical with one another, and each port driver module 90A-B may include a maximum of 16 identical port drivers 92. An expander 94 is a device for expanding the communications port data bus 88 to the 16 port drivers 92 of each module 90A-B. The expanders 94 are also implemented by a universal control hoard, illustrated in FIGURES 10a-10m and described hereinbelow. Each port driver 92 is directly connected to a CODEC 96. The CODEC 96 is an abbreviated term for a circuit that functions as a coder/decoder. The CODEC 96 transforms the analog voice signal to a digital bit stream for processing in the VMS 10. The translated digital bit stream is fed up into the port driver 92 for distribution to the remainder of the VMS system 10. In addition, in transmitting a recorded message outbound from the VMS 10 to the user, the outbound digital bit stream comes from the port driver 92 into the CODEC 96 where it is translated back into an analog voice signal which is fed into the receiver of the telephone 18 of the user. A single communication port interface 74 can drive up to 32 port drivers 92, which is equivalent to 32 telephone circuits to the VMS 10.

As required by the FCC tariff regulations, the CODEC 96 interfaces through a voice connecting arrangement 98 with the telephone 18 of the user.

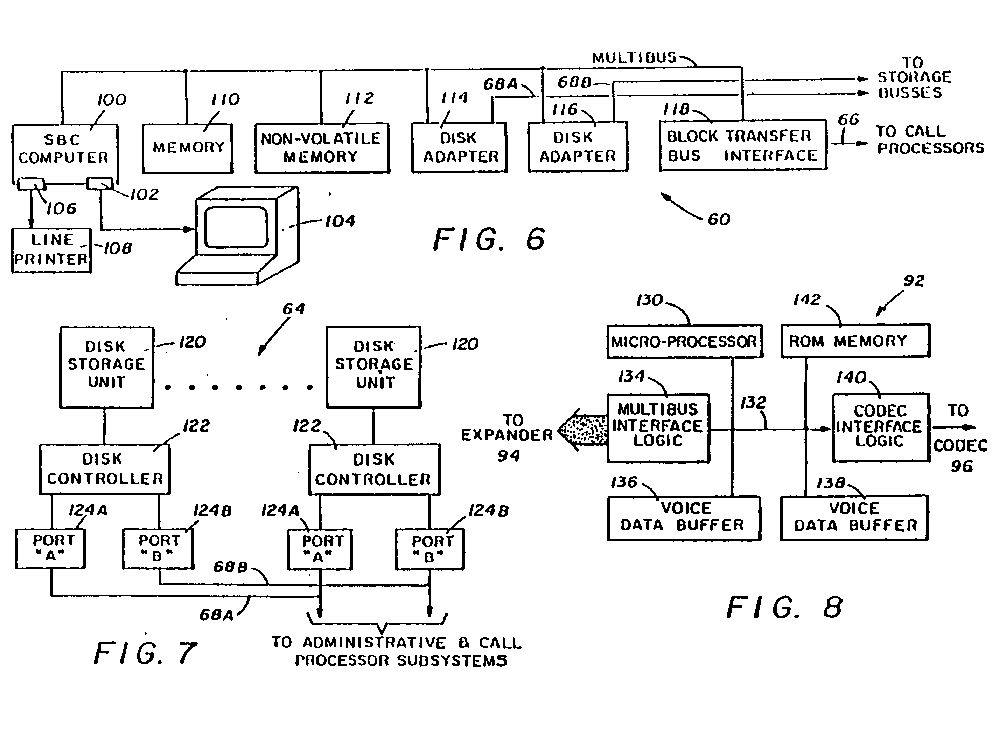

FIGURE 6 illustrates the hardware implementing the administrative subsystem 60 of FIGURE 3. The hardware implementing the administrative subsystem 60 is very similar to that implementing the call processor subsystem 62A illustrated in FIGURE 4 and described above.

A single board computer 100 (hereinafter "SBC 100") operates as the central processing unit for the administrative subsystem 60, and it is implemented by a programmable single board computer, commercially available from Intel, Model No. 80/30. The SBC 100 has one input/output interface 102 connected to a cathode ray terminal 104, which serves as the operator's console for the VMS 10. The second input/output interface 106 of the SBC 100 drives a line printer 108. The line printer 108 functions to produce reports and status information concerning the operation of the VMS 10, and it also displays alarms for abnormal conditions during the system operation. One such alarm condition would result from the failure of a recorded message to be transmitted from the VMS 10 in a predetermined period of time.

A memory unit 110 comprised of printed circuit boards provides the memory for the administrative subsystem 60. The memory unit 110 may be made up of one or more individual printed circuit boards, each having 64K bytes of RAM. These printed circuit boards are commercially available from Intel, Model SBC064. A nonvolatile memory unit 112 provides memory for the administrative subsystem 60 so that the data stored in memory is not destroyed if the system loses power. The memory unit 112 could also be implemented with core memory having a capacity of 8 to 16K bytes.

Two identical disk adapters 114 and 116 interconnect through the data storage buses 68A-68B to the data storage subsystem 64 of FIGURE 3. The disk adapters 114 and 116 are implemented with a Universal Control Board having its microprocessor programmed for the unit to run as a disk adapter. Finally, a block transfer bus interface 118 is connected to the block transfer bus 66 to the call processor subsystem 62A of FIGURE 3. The block transfer bus interface 118 is also implemented with a Universal Control Board having a microprocessor programmed to control the unit's operation.

FIGURE 7 is a block diagram view of the storage subsystem 64 of the VMS 10 of FIGURE 3. FIGURE 7 illustrates two identical disk storage units 120 with their associated disk controller 122. Each disk controller 122 interfaces with the remainder of the system through disk ports 124A and 124B through the data storage buses 68A and 68B. While FIGURE 7 illustrates two identical disk storage units 120 with their associated disk controllers 122, the disk storage subsystem 64 consists of any number of such identical units. The configuration of the VMS subsystem 10 of FIGURE 3 requires a minimum of two disk storage units 120, but additional units may be added to increase the storage capacity of the system.

The entire disk storage unit 120 may be implemented by using a Storage Technology Corporation disk drive, Model Number 2700. The STC Model 2700 disk storage unit 120 is a rotating magnetic disk having a capacity for 200 million 8 bit bytes of digital or binary information. Each disk unit contains its own dedicated disk controller 122 which is built around a microprocessor. The disk controller 122 may be implemented with a Motorola microprocessor, Model Number 6801, 64K bytes of RAM memory, and it also includes a special purpose digital hardware to drive the input/output disk ports 124A and 124B into the disk unit 120 and to directly control the disk storage unit 120. As additional disk storage units 120 are added to the system, their associated disk ports 124A and 124B are connected to the data storage buses 68A and 68B.

The VMS system 10 is provided with a minimum of two disk storage units 120, since the functioning of the disk storage units 120 is essential to the entire VMS system. The two data storage buses 68A and 68B are provided to achieve redundancy in the system. If one of the buses goes out of service, then the other bus still has access to all of the disk units 120 through the single remaining bus. With a single data bus in operation, the system will still operate, but it will not have the same throughput capability in terms of the amount of data that can be processed by the VMS 10. However, when both disk storage buses 68A and 68B are running at normal operation, this allows twice as much information to be fed into and out of the storage system 64 than could be accomplished with a single data storage bus.

A separate disk controller 122 dedicated to the operation of each disk storage unit 120, enables blocks of information to be more efficiently transferred within the VMS 10. For example, in transferring a block of information from the call processor subsystem 62A or the administrative subsystem 60 to or from the disk storage unit 120, the transfer does not occur in real time from one of the data storage buses 68A or 68B onto the disk unit 120. The block of information is transferred into the RAM storage of the disk controller 122, and then the disk controller 122 controls the operation of transferring the block of information from its RAM directly into the disk unit 120. In this way, the VMS 10 storage bus 68A or 68B is not tied up for the period of time it takes to write a block of information directly onto the disk 120; rather, it is occupied only for the period of time it takes to transfer that block of information into the RAM of the disk controller 122.

FIGURE 8 is a block diagram view of one of the port drivers 92 of FIGURE 5. The central control unit of the port driver 92 is an Intel 8085 microprocessor 130 connected by an internal bus 132 to the remainder of the port driver system 92. The microprocessor 130 is programmed to control a digital logic hardware device, identified as a bus interface logic unit 134. The bus interface logic 134 is an 8 or 16 bit wide parallel data path serving as the electrical interface between the expander 94 in all of the port drivers 92. The bus interface logic 134 consists of a bus backpane into which are plugged the boards for the port drivers 92 and expanders 94.

Voice data buffers 136 and 138 are connected to the remaining components of the port driver 92 through the internal bus 132. The voice data buffers 136 and 138 function to temporarily store the incoming or outgoing data bit streams of the digitized voice signal incoming or outgoing to the CODEC 96. The voice data buffers 136 and 138 interface through a CODEC interface logic unit 140 to the CODEC 96. A ROM memory unit 142 stores the program for the microprocessor 130.

The operation of the dual voice data buffers 136 and 138 may be illustrated by the example of digitized voice data being received by the port driver 92 from the CODEC 96. The voice data entering the port driver 92 is temporarily stored in one of the dual voice data buffers 136 or 138. When the selected voice data buffer is full, that entire block of data is transmitted out to the expander 94 up to the communication port interface 74 of the call processor 62A. At the same time when the port driver 92 senses that the first voice data buffer is full, the second voice data buffer is used to store the subsequent voice data from the CODEC 96. The port driver system 92 is programmed to control the dual voice data buffers 136 and 138 in the transmitting mode and the storing mode. The voice data buffers 136 and 138 are implemented in RAM semiconductor memory in the range of 512-2K bytes.

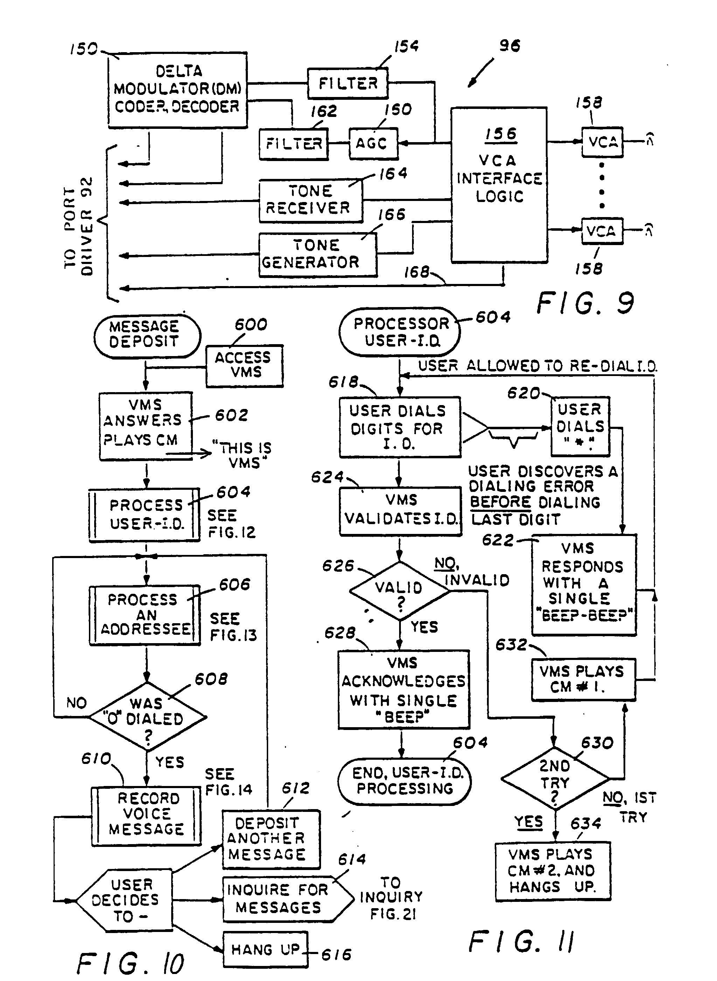

FIGURE 9 is a block diagram of the CODEC 96 of FIGURE 5. A delta modulator 150 (hereinafter "DM 150") is connected to the port driver 92. The DM 150 functions as either a coder for converting analog signals to digital signals, or a decoder for converting digital signals to analog signals. The operating mode of the DM 150, whether it is functioning as a coder or decoder, is controlled by one of the interface signals 152 to the port driver 92. The DM 150 implements a particular technique for converting analog to digital and digital to analog.

The DM 150 decodes the digital wave form to an analog signal and passes it through filter 154 which is a voice band filter with a cutoff frequency of approximately 2700 hertz. The analog signal from the filter 154 is fed into a VCA interface logic 156, through a VCA 158 to the ON NET telephone 18. The VCA 158 is required by FCC Tariff Regulations as the line of demarcation between the equipment of the telephone company and the equipment of a private user.

The analog signal from the telephone 18 is transmitted through the VCA 158 and VCA interface logic 156 to an automatic gain control circuit 160, which serves to amplify the analog voice signal from the VCA. The amplified analog signal is then passed through another band pass filter 162 for passing frequencies in the range of approximately 300 hertz to 2700 hertz. The filtered analog signal is then fed into the DM 150, which is functioning as a coder, and transformed into a digital bit stream to be fed to the port driver 92.

The first function of the CODEC 96 has been described above in providing the data path for the incoming and outgoing voice signals from the telephone 18 to the VMS system 10. An ancillary function of the CODEC 96 is provided by a tone receiver 164, which receives the analog wave forms generated by the signal from a touchtone type of telephone 18 and converts these waveforms to digital information corresponding to the tone received. A tone generator circuit 166 provides the analogous function in converting digital signals from the VMS 10 to the receiver of the user telephone 18. The tone generator 166 functions to generate touchtones as well as progress tone acknowledging the status of the operation of the VMS 10. The tone generator 166 functions to form the outgoing dialing in a touchtone system. A pulse dialing path 168 is provided to receive pulse dialing coming in from a rotary telephone 18, and it also functions to do the outbound dialing to a rotary telephone 18.

The VMS 10 utilizes several microprocessor controlled Universal Control Boards connected to one bus instead of a single minicomputer. The Intel bus is the main bus which connects all the microprocessors together. The Universal Control Board has two distinct capabilities for moving data around in the VMS 10. First, the microprocessor 200 of the Universal Control Board may transfer data in single bytes in and out of the bus memory at a relatively slow rate to communicate with other microprocessors 200. Secondly, the Universal Control Board may also control the transfer of data in block form at a very high rate of speed through the cable or data bus interconnecting the Universal Control Boards. A ROM sequencer on the Universal Control Boards has the function of coordinating the timing of the transfer of information from one cable to another cable with the microprocessor 200 instruction transfers to or from the bus.

The VMS 10 is an advanced communication system for audio signals, including facsimile, data, cryptographic and voice signals. The VMS 10 implemented in the preferred embodiment is described above in connection with voice signals, but the concept of the communication system has application for other audio signals as well. The VMS 10 of the preferred embodiment allows users to deposit voice messages which are recorded and later delivered to the intended recipients. In addition, users may call the VMS 10 at any time and inquire if any messages have been deposited for them. The VMS 10 may also answer a telephone while the user is absent or otherwise unavailable to receive the call and record a voice message for subsequent delivery to the user.

While the VMS 10 is intended primarily for use within medium to large corporations, it may be effectively used to improve the operator efficiency of any communication system. It offers an improved method of communications and at the same time it provides an excellent return on invested capital, achieved through increased personnel productivity at all levels within the company, as well as through personnel reduction and elimination of many existing, costly communication facilities. The VMS 10 also provides a number of usage reports to monitor the operation of the system.

The three basic features of the VMS 10, DEPOSIT, DELIVERY and INQUIREY, have been simplified to provide an easy to use system. The VMS 10 includes instructional and "canned" messages. Each of the three basic features of the VMS 10 will be described below.

FIGURES 10 to 13 represent the flow chart for the DEPOSIT feature of the VMS 10. "DEPOSIT" is the procedure by which one or more voice messages are placed into the VMS 10 for subsequent delivery. Referring to FIGURE 10, the DEPOSIT procedure is initiated by dialing into the VMS 10 to access the system 600, causing the VMS 10 to answer 602 by playing a canned massage, such as "This is VMS."

A timer is started when the VMS 10 answers a call and identifies itself at step 602. The user then must complete the entire DEPOSIT process within a preset time interval (for example, 4 minutes). Approximately 30 seconds before this interval expires the VMS 10 will begin signaling the user with an alarm, such as a "beep" every 3 seconds. If the user has not completed the DEPOSIT operation by the end of the time interval, the VMS 10 will abort the DEPOSIT operation and terminate the user's access to the system.

After the VMS 10 answers 602, the user then dials a unique authorization number 604 for identification purposes to gain access to the system. The VMS 10 will allow the user a preset amount of time to dial a signed authorization number, e.g., 45 seconds. Upon entry of a valid authorization number, the VMS 10 responds with a short progress tone indicating it is ready to process an addressee 606. When all addresses have been entered, the user dials an End-of-Address indicator, e.g., "0," and VMS 10 will provide a record-mode "idle" tone, such as a repeating "beep-beep ... " signal. The next step in the DEPOSIT routine 608 determines if the end of record indicator has been entered. If it has not, he returns to step 606 for the entry of an addressee number. If it has determined the a "0" was dialed, the user dials "1," removing the VMS 10 idle tone which enables this to record a voice message 610. At the conclusion of the recording step 610, the user may elect to either DEPOSIT another message 612, inquire for messages 614 or hang up 616.

In the system's step 606 in processing an addressee, the user may dial one or more addresses to which the voice messages are to be sent. "Addressees" are generally no more than telephone numbers, local extension numbers, distant company locations, or "off net" long distance numbers. A system parameter may be entered from the console to set the maximum number of individual addresses which may be entered. In addition, a distribution list code may be used as an address. This is a three digit address which is automatically translated by the VMS 10 into the previously defined individual telephone numbers of the group. The user of the VMS 10 in this way may send a single voice message to a number of people by using a single address, analogous to using a distribution list for a memo or letter. The VMS 10 will then deliver the voice message independently to each person within the group.

The VMS 10's step 604 for processing a user ID is set forth in further detail in FIGURE 11. The procedure is initiated by the user dialing the identification code digits 618. The user may dial an "*" 620, if he discovers a dialing error before dialing the last digit. The VMS responds with a single "beep-beep" tone 622 to acknowledge that the user is allowed to redial the identification code. The VMS 10 next validates the identification code of the user 624. In determining the validity of the code 626, the VMS 10 acknowledges if a valid code has been entered 628 with an audible signal, such as a single "beep." This completes the user-ID processing 604 to allow the user to proceed to process an addressee 606 (FIGURE 10). However, if the user identification code has been determined to be invalid, the VMS 10 determines if this is the first or second invalid entry 630. If it was the first attempt to enter a valid user code, the VMS 10 plays a canned message 632, such as: "The ID (__) is not valid. Please try again." The program then returns the user to program step 618 for redialing of the identification code. If the second try for the validity test 630 determines that this is the second entry of an invalid code, the VMS 10 plays a canned massage and hangs up 634. The canned massage at step 634 would be: "The ID you entered is again not valid. Please dial (__) for information or assistance. Thank you.

" There is an alternative to the progress tone provided at program step 628 to the VMS 10's acknowledgement of a valid ID code. A canned massage may instruct the user as follows: "To deposit a message, you may now dial the addressees. For any other function dial the 3 digit special function code." The user may access the VMS 10 through a special code to provide for verbal instructional commands in lieu of progress tones.

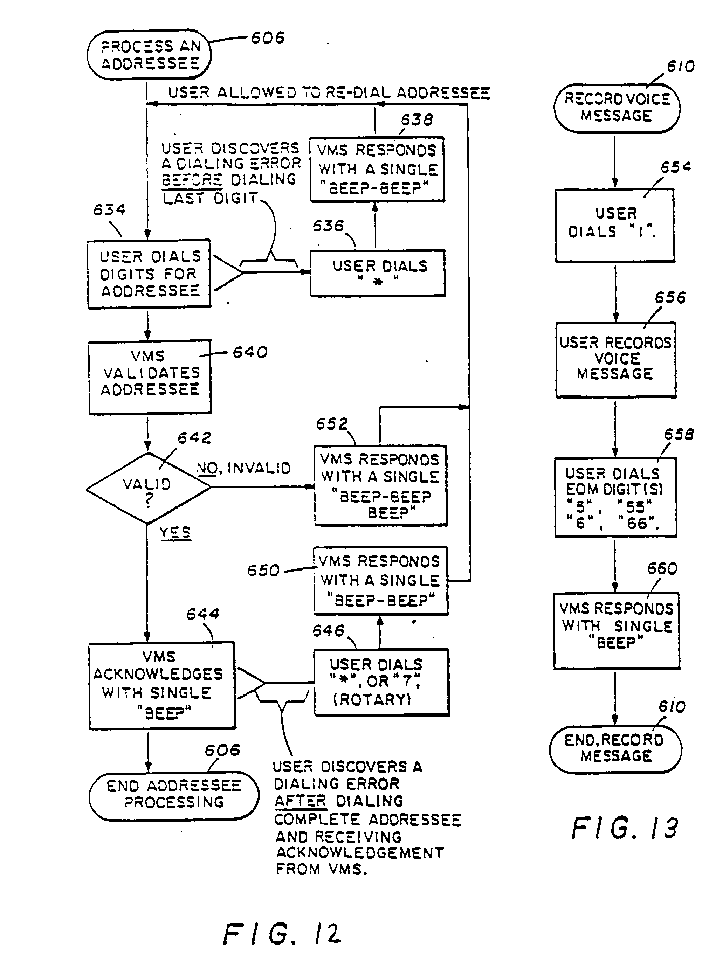

FIGURE 12 is a flow chart of the process and addressee program step 606 of FIGURE 10. In the first program step 634, the user dials digits for an addressee. If the user discovers a dialing error before dialing the last digit he may branch to program step 636 by dialing a "*" to delete the addressee number. The VMS 10 responds with an audible signal, 638 "beep-beep," and allows the user to redial the addressee. Upon the user's entry of the digits for an addressee, the program provides for the VMS 10 to validate the addressee 640. The program step 642 determines the validity of the addressee. If a proper addressee code has been entered, the VMS acknowldeges with an audible signal 644, "beep." If the user discovers a dialing error after dialing a complete addressee and receiving acknowledgement from the VMS 10, he may branch to program 646 by dialing "*" on a touch signaling phone or "7" on a rotary phone. The VMS 10 program next responds with an audible signal 650, "beep-beep" and allows the user to reenter at program step 634 to dial the digits for the addressee. If at the validity determination step 642, the VMS 10 determines that an invalid addressee number has been entered, the signal, "beep-beep-beep," and allows the user to redial the addressee.

Referring to FIGURE 13, the record voice message block 610 of FIGURE 10 is shown in greater detail. The VMS 10 emits a repetitive audible tone such as an idle tone prior to the recording of any message. The user dials "1" in block 654 to remove the idle tone from the VMS 10 and to allow the user to record a voice messge 656. During the speaking of the voice message, the following dial commands are available to control the recording procedure:

| DIAL COMMAND | VMS ACTION |
| --- | --- |
| 1 | Start recording. |
| 1 | Stop recording and return the record mode idle tone. |
| 3 | Back up (approximately 10 seconds) and start playing. |
| 4 | Back up to the beginning of the voice message and start playing. |
| 9 | Skip forward (approximately 10 seconds) and play. |
| 99 | Skip forward to end of recorded data and return to the record mode idle tone. |

Following the end of the voice message step 656, the user next dials an End-of-Messge indicator (EOM) at step 658 by dialing "5" for normal message delivery and "6" for priority delivery. The EOM can also be used to activate the nondelivery notification (NDN) feature. This feature alows the voice message originator to be notified automatically if the message is not delivered to the intended recipient the next business day. If this happens, the voice message is automatically readdressed to the originator, and the following "canned massage" appended to its beginning: "This is VMS, the following message was not delivered (the voice message follows)." NDN is activated by dialing the EOM twice ("55"), or ("66"). Upon the user's dialing the EOM digits in step 658, the VMS 10 responds with a "beep" at program step 660. At the end of record voice message program step 610 the user has the three program options, as illustrated in FIGURE 11 and described hereinabove.

The DEPOSIT function of the VMS 10 further provides for discarding the voice message if the user hangs up prior to EOM. The VMS 10 DEPOSIT program also provides for three different types of time periods which are predefined for the customer at the time of system generation. These predefined time periods may be subsequently changed from the system operator's console 104 of FIGURE 6. The first of the three time periods the VMS 10 uses to monitor the message DEPOSIT process is an overall call duration timer. About 30 seconds prior to the elapse of the message DEPOSIT operation within the remaining time, the VMS 10 will abort and hang up. There is a second short duration time period that VMS activates while waiting for the user to dial a "parameter" such as the user ID step 604, a single addressee in step 634, or dialing "0" to signal the end of addressees in step 608. Finally, a third predefined time period is used by the VMS 10 to monitor the time that the user is in the record mode idle state prior to the user dialing "1" in step 654. This record mode idle state is entered afer dialing the "0" for the end of addressees code in step 608.

The DEPOSIT function also includes program means for negating one or more numbers in a distribution code. For example, if a particular distribution code equated to fifty individual telephone numbers, one of these numbers that the originator did not wish to send a message to could be deleted for the entry of a suitable program code. After the entry, the distribution code will have the effect of negating that address from a list of numbers on the distribution code to receive that voice message.

In addition, the DEPOSIT function of the VMS 10 is also programmed to allow a user to call the VMS 10 by a Special Function Code to turn on or off the Enhanced Verbal Commands and Reply (EVCR). The user's selection of the EVCR mode causes the VMS 10 to play prerecorded instructional messages in place of progress of error tones, e.g., tones which might relate to incorrect user ID's and addresses.

"DELIVERY" is the second of the three system features of the VMS 10, which enables voice messages to be played to their recipients. FIGURE 5 illustrates a flowchart of the program of the VMS 10 for the message DELIVERY function 670. In initial step 672 of the program the VMS 10 calls the message recipient by dialing the telephone of the recipient. In the next step 674, the user answers and the VMS 10 may identify itself by playing canned massage as follows: "This is VMS. There are _ messages for you. Please dial your authorization number if you wish to receive them. Thank you." If the message addressee had not answered the initial telephone call from the VMS 10, the VMS 10 is programmed to wait and attempt to redeliver the message at a later time. Likewise, if the message addressee's telephone had been busy, the VMS 10 would again be programmed to attempt to deliver the message a predetermined number of times at predetermined time intervals. The number of attempts and time intervals between each of the attempts by the VMS 10 to deliver the message are programmed parameters that are definable by the customer through the system console 104 of the VMS 10.

When the VMS 10 establishes contact with the message adressee, the message addressee responds by dialing his unique authorization number and the VMS 10 processes the user's ID at step 676. After the process user ID has been accepted at program step 676, the VMS 10 emits an idle tone at the program step 678, indicating the non-lay mode. The user or message adressee then dials "2" to begin playing the voice message program 680.

During the playing of a voice message, the following dial commands are available to the message addressee to control the VMS 10 message delivery 670:

| DIAL COMMAND | VMS ACTION |
| --- | --- |
| 2 | Start Playing. |
| 2 | Stop playing, followed by nonlaying indicator, a periodic "beep." |
| 3 | Back up and play approximately the last 10 seconds. |
| 4 | Back up to the beginning of the voice message and start playing. |
| 9 | Skip forward approximately 10 seconds and play. |
| 99 | Skip forward to end of message. |

At the conclusion of the voice message, the VMS 10 is programmed to play some audible tone, such as three short "beeps" indicating the end of message, or an EOM canned message if EVCR is turned on. The VMS 10 is then programmed to wait approximately 5 seconds for the next user action 682. The message addressee then has the option of taking no action 684 or initiating some action with the VMS 10 through one of the special function codes redirect 686, reply 688, save 690 and file 691.

If the user decides to take no action 684, the VMS 10 is programmed to determine whether there are more messages 692. If there are no more messages, the VMS is programmed to play a canned message and hang up 694. Thus a suitable canned massage could state: "This is VMS. This concludes your voice message delivery. Thank you." If the VMS 10 determines that there are more messages for the addressee 692 the VMS 10 indicates such message to addressee at program step 696 by playing a suitable canned message, such as: "This is VMS. Here is another message for you." The program is then returned to step 678 for the VMS 10 to admit an idle tone prior to playing a voice message step 680.

The message addressee can enter the VMS 10 through one of the special function codes redirect 686, reply 688, save 690, and file 691. These program steps are described below.

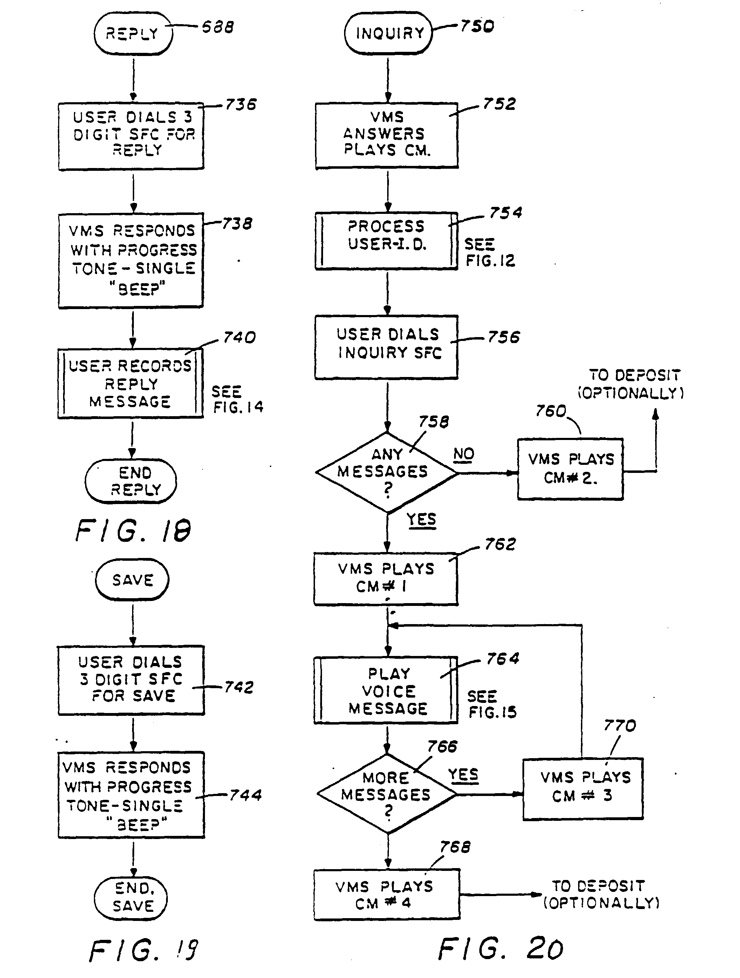

The VMS 10 is ordinarily programmed if a message addressee hangs up during the playing of a voice message. That message and all other undelivered messages will be delivered at a later time or could be available to the message addressee through the INQUIREY function (FIGURE 20).

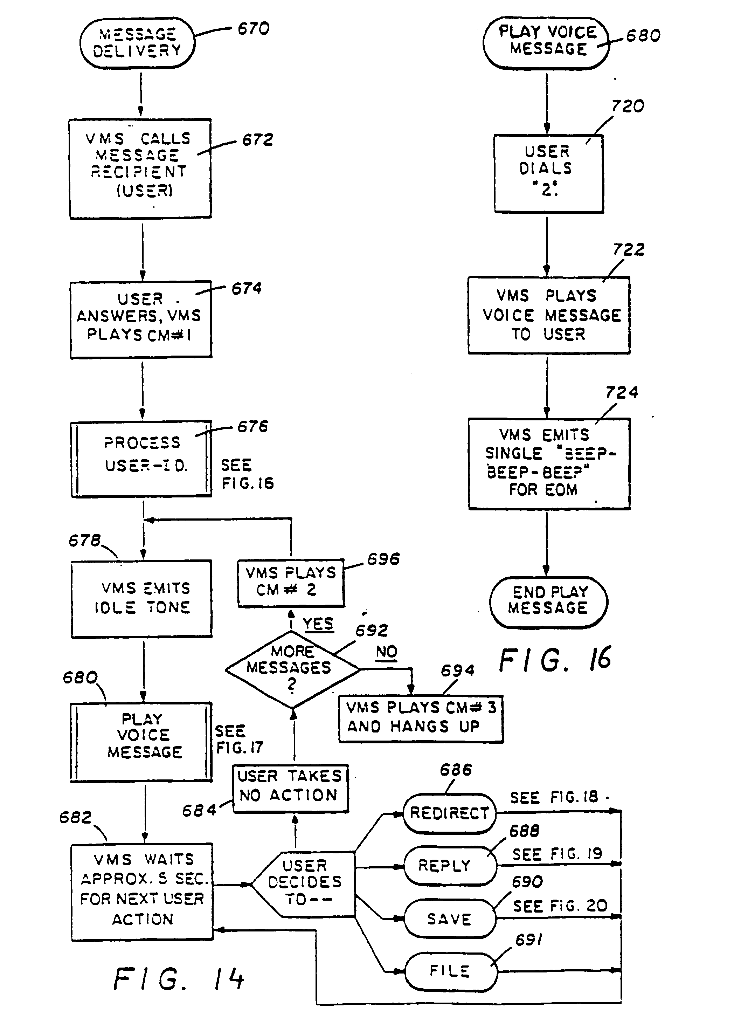

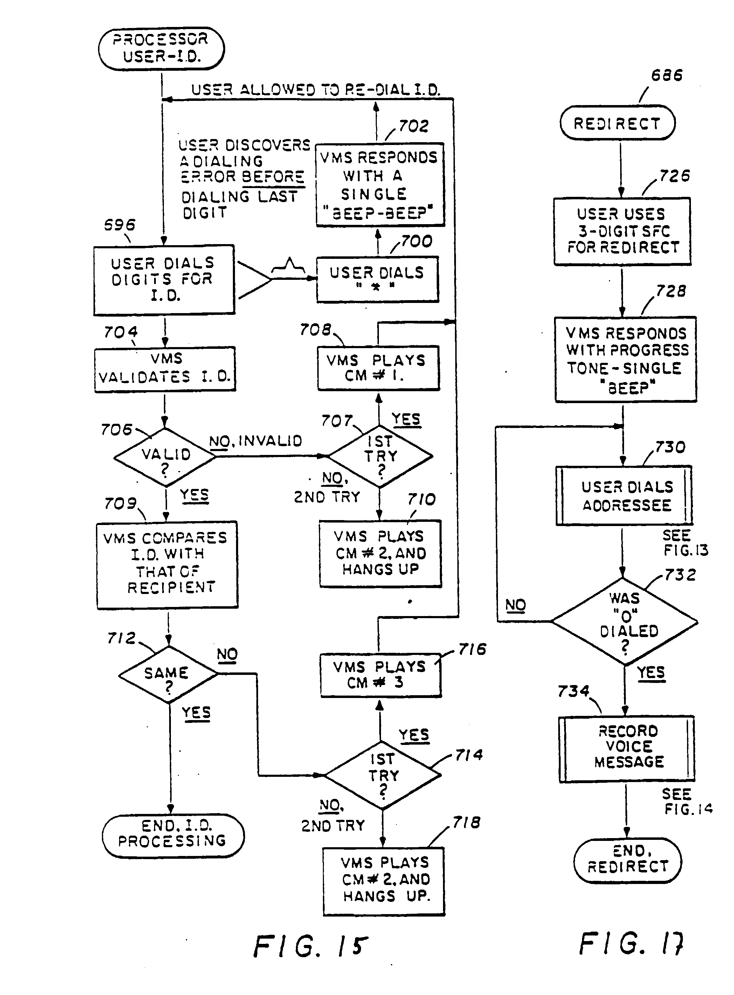

The VMS 10 program routine for the process user ID step 670 is illustrated further in the flowchart presented in FIGURE 16. The user first dials digits for its identification code step 696. The system enables a user to dial "*" in step 700 if he discovers a dialing error before dialing the last digit. If the user dials "∗" 700, the VMS 10 responds with an audible tone, "beep-beep" at step 702 and returns the user to step 696 for reentry of the authorization code. After the user has entered his authorization code, the VMS 10 validates the ID at program step 704. The VMS 10 determines the validity of the ID at step 706, and if it determines that the user has entered an invalid ID then it determines at step 707 whether this is the first or second attempt to enter a valid ID. If its is the first attempt, the VMS 10 plays a suitable canned message at step 708 and returns the user to program step 696 for reentry of the authorization code. A suitable canned message would be the following: "The ID (__) is not valid. Please try again." If the VMS 10 determines at step 707 that this is the second attempt to enter a valid ID the VMS 10 proceeds to play another canned massage step 710 and hangs up. A suitable canned message upon the detection of the second entry of an invalid user ID would be the following: "The ID you entered is not the correct one for the message recipient. Please try again."

The VMS 10 at program step 706 determines that a valid user ID has been entered. The VMS 10 next compares the ID with that of the recipient at step 709. This concludes the process user ID processing of program 676 of flowchart of FIGURE 14. If the VMS 10 at step 712 determines that the ID is not the same as that of the recipient, then program step 714 determines whether this is the first or second attempt to determine if it is the recipient's identification code. If it is the first attempt, the VMS 10 at step 716 plays a suitable canned message and returns the user to program step 696 for reentry of the user identification code. A suitable canned message at program step 716 could be the following: "The ID you entered is not the correct one for the message recipient. Please try again." If the VMS 10 determines that this is the second unsucessful attempt in comparing the recipient's ID, the VMS 10 at program step 718 plays a suitable canned message and hangs up. The VMS 10 at program step 718 will play the same canned message included in program step 710.

FIGURE 16 illustrates the play voice message subroutine 680 of the message delivery program 670 of FIGURE 15. The play voice message subroutine 680 begins with the user dialing "2" in step 720 to remove the VMS 10 idle tone and initiate the playing of the voice message. The VMS 10 plays the voice message to the user at step 722, during which time the user can control the playback process by dialing certain digits on his telephone, as described above.

At the conclusion of the voice message, the VMS 10 emits an audible tone at step 724 to indicate end of message. The VMS 10 is returned to program step 682 of FIGURE 15.

As described above, the VMS 10 waits approximately five seconds for the next user action 682 which enables the user to enter certain special function codes if he so chooses to access the VMS 10. The REDIRECT special function code (SFC) subroutine program 686 is illustrated in FIGURE 17. The user enters a three digit SFC at redirect program step 726. The VMS 10 responds with a progress tone at step 728, such as a "beep." The user then dials the addressee at program step 730, and the program proceeds through a subroutine as illustrated in FIGURE 12 of the message deposit flowchart. The program then determines at step 732 if a "0" was dialed at end of addressee number. If it was not entered, the user is returned to program step 730 for dialing an addressee. If the user has dialed a "0" he may record a voice message at program step 734, which voice message is appended to the beginning of the original voice message is appended to the beginning of the original voice message and delivered to the newly designated addressees. The original voice message with recipient's comments then will be sent to the new adddressees. The program step 734 follows the subroutine of the message deposit flowchart of FIGURE 13. The user is then returned to the VMS 10 program step 682 of FIGURE 14, which allows the user the opportunity again to select another special function code.

The REPLY special function code (SFC) flowchart 688 is illustrated in FIGURE 18. The message addressee which desires to reply to the voice message immediately may enter a special three digit SFC at program step 736. The VMS 10 responds with a progress tone at program step 738, which enables the user to record reply message at program step 740, which follows the flowchart subroutine of the message DEPOSIT flowchart of FIGURE 13. The REPLY SFC feature enables the user to have a voice message delivered to the voice message originator without having to call the VMS 10 to enter an authorization number and the address of the originator. After the reply message has been entered, the VMS 10 returns to its normal procedures at program step 682 of FIGURE 14 starting with playing the end of message indicator.

Following the program step 682, the user may also elect to enter the file special function code 691 for the verbal file folder. This is accomplished by dialing the code for the verbal file folder plus the verbal file folder number (0 thorugh 99). A copy of that message will then be retained in one of the 99 verbal folder categories along with all other voice messages in that verbal file folder for later retrieval.

FIGURE 19 illustrates the SAVE SFC program flowchart of the message delivery function 670 of FIGURE 14. At the conclusion of the end of message indicator program step 682, the user may decide to save a voice message for later retrieval. The user may accomplish this by dialing the SAVE special function code which causes the voice message to be saved for a predetermined period one complete business day. The user simply dials the three digit special function code for the SAVE program step 742, and the VMS 10 responds with a progress tone at program step 744. The VMS 10 is programmed such that undelivered messages which did not have nondelivery notification (NDN) will be discarded at the midnight following their retention for one full business day. The appropriate summary report will be created by the VMS 10 for each message so discarded, showing the originator ID, input time and date and delivery time and date.

FIGURE 20 illustrates the INQUIRY function 750 which enables the user to call the VMS 10 to determine if there are any messages for him. If there are no messages, the VMS 10 so notifies the user. If there are messages, they are delivered immediately.

The INQUIRY function 750 begins with the user dialing the VMS 10, and the VMS 10 program responds at step 752 with an acknowledgment in the form of a short progress tone or a canned message. The user then enters an identification code at step 754 to be processed in the manner previously set forth in the message DEPOSIT flowchart of FIGURE 11. The user next dials the INQUIRY special function code at step 756, and the VMS 10 makes the determination at program step 758 if there are any messages for the user. If there are none, the VMS 10 plays an appropriate canned message at program step 760 and gives the user the option to deposit a message. If the program step 758 determines that there are any messages, the VMS 10 plays an appropriate canned message at step 762, which might include an instruction advising the user to dial a particular digit if he wishes to receive the messages. The VMS 10 will then play the voice message at program step 764 in the same manner previously set forth in the message DELIVERY flowchart of FIGURE 14. At the end of message indicator, the VMS 10 will determine at program step 766 if there are any more messages for the addressee. If there are none, the VMS 10 plays an appropriate canned message at program step 768, allowing the user the option to deposit any messages with the VMS 10. If there are more messages, the VMS plays an appropriate canned message at program step 770 and returns the user to the play voice message routine 764 of the flowchart.

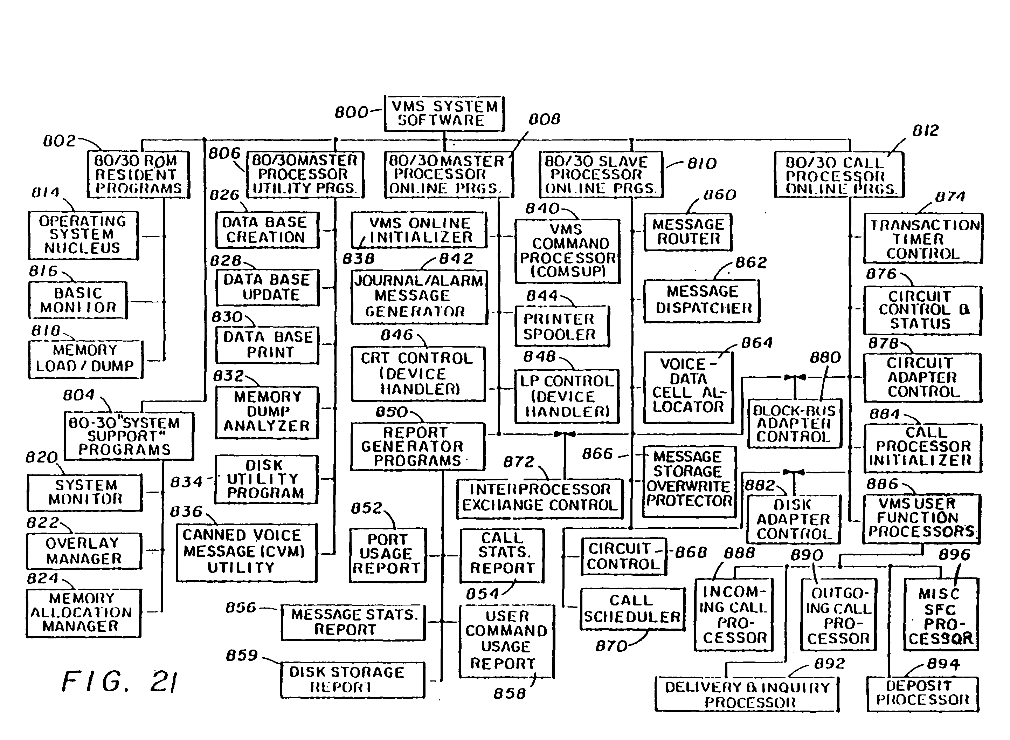

FIGURE 21 contains a VTOC (Visual Table of Contents) of all the programs included in the VMS system software 800. At the top level these programs are divided into six categories as follows:

(1) ROM - resident programs 802,
(2) "System support" programs 804,
(3) Master processor utility programs 806,
(4) Master processor "online" programs 808,
(5) Slave processor "online" programs 810,
(6) Call processor "online" programs 812.

All of these programs run in the 80/30 SBC's (Single Board Computers) that are used to implement the call processor in the call processor subsystem 62 or the master and slave processors in the administrative subsystem 60.

## 80/30 ROM-Resident Programs

The processor programs are contained in read-only memory (ROM), and are used in all three catagories of processors ("master," "slave," and "call"). An operating system nucleus 814 is the resident operating system that controls the multi-tasking environment of the application programs. A Basic Monitor 816 is the program that receives control on power-up, or system reset. It provides some simple CRT-based functions, such as examining and modifying the contents of memory cells, and also controls memory loading/dumping. A Memory Load/Dump 818 operates under control of the Basic Monitor 816. It provides the functions of loading "memory-image" data into memory from disk, and dumping memory to disk. An area of the disk is reserved for these memory-images that are used by this program.

## 80/30 "System Support" Programs

The System Monitor 820 program is used only in the master processor. Its function is to load programs from disk into memory as instructed to do so by an operator at the console CRT 104. The Overlay Manager program 822 is a support function that is used to load individual program-segment overlays into memory. The Memory Allocation Manager program 824 is a support function that manages a "pool" of memory space from which blocks (of memory space) are dynamically allocated to requesting programs.

## 80/30 Master Processor Utility Programs

The Master Processor Utility Programs 806 are not normally used when the VMS system 10 is online. The functions they provide can be regarded as "tools" that are used to maintain, update, and debug the system. A Data Base Creation program 826 is used to create a completely new user record data base on the system disk. A Data Base Update Program 828 and Data Base Print Program 830 will print the contents of the user records in the data base on the system line printer 108 (See FIGURE 6). A Memory Dump Analyzer program 832 will display on the console CRT 104 or the line printer 108 the contents of a memory dump (or a portion thereof) as recorded in one of the disk storage areas reserved for memory dump/loads. A Disk Utility Program 834 provides a variety of functions that are concerned with moving, saving, and restoring information on the system disks 120; for example, transferring information from one area to another in disk storage, or transferring data from disk storage to/from diskettes. A Canned Voice Message (CVM) Utility program 836 prepares in a form suitable for storage on the system disks 120 the digitized voice data for the VMS canned voice messages.

## 80/30 Master Processor Online Programs

The Master Processor Online Program 808 runs in the master processor of the administrative subsystem 60 during online operation. Some of these programs are not limited to online use only (for example - the device handlers for the console CRT 104 and the line printer 108). A VMS Online Initlalizer program 838 performs a variety of initialization functions that are required to bring the system into an online state. These functions include initializing (or restoring) global system tables in memory, and giving instructions for the other processors (the master and the multiple call processors) to initialize themselves. A VMS Command Processor (COMSUP) program 840 provides all the functions required to support the VMS online command set. These commands are entered into the system via the console CRT 104. A Journal/Alarm Message Generator program 842 is to create and format, at the request of other programs in the system, journaling and alarm messages that are destined to be displayed on the system line printer 108. Journal messages, which are normally no more than one or two lines in length, are used to create a running log of "events" that occur during normal system operation. Alarm messages are used to log the occurrence of "abnormal" conditions that may require action by the system operator. A Printer Spooler program 844 "spools" the incoming requests for log messages to the system disk, and also to subsequently "de-spool" the messages and print them on the line printer 108. This mechanism allows printed messages to be temporarily buffered on disk while waiting for the line printer 108 to become available.

The CRT Control program 846 is a device handler that provides an interface between the CRT 104 keyboard/ display and any program requesting I/O operations within the CRT 104. An LP Control program 848 is a device handler that provides an interface between the line printer 108 and any programs requesting output operations to the printer.

Report Generator Programs 850 programs prepare, in a form suitable for the line printer, statistical reports on various aspects of system operations.

### 80/30 Slave Processor Online Programs

The programs of the Slave Processor Online Programs 810 runs in the administrative subsystem 60 daring online operation. The functions of most of these programs can be summarized by saying that they perform support operations that are requested by commands coming "upstream" from programs in the call processors 62A-62C.

A Message Router program 860 is informed of each occurrence of a new incoming message that has been received and stored in the system. It is responsible for creating the Message Control Block on disk, and insuring that the message is queued to each of its addresses. The program is also responsible for "expanding" distribution codes that are used as addresses.

A Message Dispatcher program 862 acts on requests coming up from the call processors 62A-62C to provide messages for delivery. For each request it will provide the address in disk storage 120 of the next message to be delivered to a user. There is an existing connection with this user for the purpose of delivering messages. After the message has been delivered it will be dequeued. A voice-Data Cell Allocator program 854 allocates disk space for storing voice messages. Requests for space come "upstream" from programs in the call processors 62A-62C. The Allocator responds to these requests by returning (to the requesting programs) the addresses of the allocated disk storage.

A Message Storage Overwrite Protector program 866 protests "old" undelivered voice messages from being overwritten. As the Allocator program 864 continues to allocate disk storage space, the point will eventually be reached where some of this space must be re-used. It is the responsibility of the overwrite protector program 866 to insure that any undelivered messages in the space that is about to be re-used are protected or moved. A Circuit Control program 868 is responsible for overall control of the voice circuits. Information that comes upstream from the call processors 62A-62C that reflects changes in circuit status is handled by this program, as are status changes that result from commands by the system operator. A Call Scheduler program 870 is responsible for scheduling and initiating outgoing calls to users that have messages in queue awaiting delivery. Also included is the assignment of circuits for the outgoing calls.

An Inter-Processor Exchange Control program 872 is to pass information from programs running in the master processor 808 to those in the slave processor 810, and vice-versa. The external interface to this program looks like that for the block-bus control program. Internally, the main difference is that the data to be exchanged is passed through common memory that is addressable by both master and slave processors instead of being transmitted across the block-bus. There are two complementary sections of this program. One runs in the master, and one in the slave.

### 80/30 Call Processor Online Programs

The Call Processor Online programs 812 run in the call processor 62A-62C during online operation. Most of the functions provided by these programs are concerned with implementing the VMS user functions (those functions a user may invoke from his telephone).

A Transaction Timer Control program 874 is to manage the various "watchdog" timers that control the time limits applied to the various VMS 10 user functions. A Circuit Control and Status program 876 is responsible for overall control of the voice circuits attached to a single circuit subsystem. It reports changes in the status of circuits "upstream" to the slave processor, and responds to explicit requests for circuit state changes that come "downstream" from the slave processor. A Circuit Adapter control program 878 is a "device handler" that directly controls the hardware interface to a circuit module adapter. All I/O operations for the circuit modules and circuits are directed to this program.

A Block-Bus Adapter Control program 880 is a device handler program that directly controls the hardware interface to a block-bus adapter. The purpose of the block-bus, its hardware adapters (one in the administrative subsystem 60, and one in each circuit subsystem), and its handler program is to provide a path for communication between programs that are running in the different subsystems. A Disk Adapter Control program 882 directly controls the hardware interface to a disk adapter 114 or 116. All requests for data transfer to/from the data storage subsystem 64 are sent to this program. Notice in FIGURE 1 that identical copies of this program run in the call processors and in the slave processor of the administrative subsystem. A Call Processor Initializer program 884 provides all of the functions required to bring a Call Processor into an online state after an initial program load.

A VMS User Function Processors program 886 provides all of the functions required to communicate with a VMS user at his telephone, and executes the VMS commands that are invoked by the user (by dialing digits). These function processors can be divided into five categories as follows:

(1) An Incoming Call Processor 888 - controls the "answering" of incoming calls to VMS from users.
(2) An Outgoing Call Processor 890 controls the dialing and connection establishment for outgoing calls to users.
(3) Delivery and Inquiry Processors 892 controls the process of delivering voice messages to a user; either for the "normal" delivery function (on an outgoing call), or the Inquiry function (on an incoming call).
(4) A Deposit Processor 894 controls the process of receiving and storing new voice messages from users.
(5) Miscellaneous SFC Processors 896 are processors for Special Functions Codes other than those that are included in the Delivery and Inquiry Processors.

## VMS SYSTEM CONTROL AND DATA FLOW

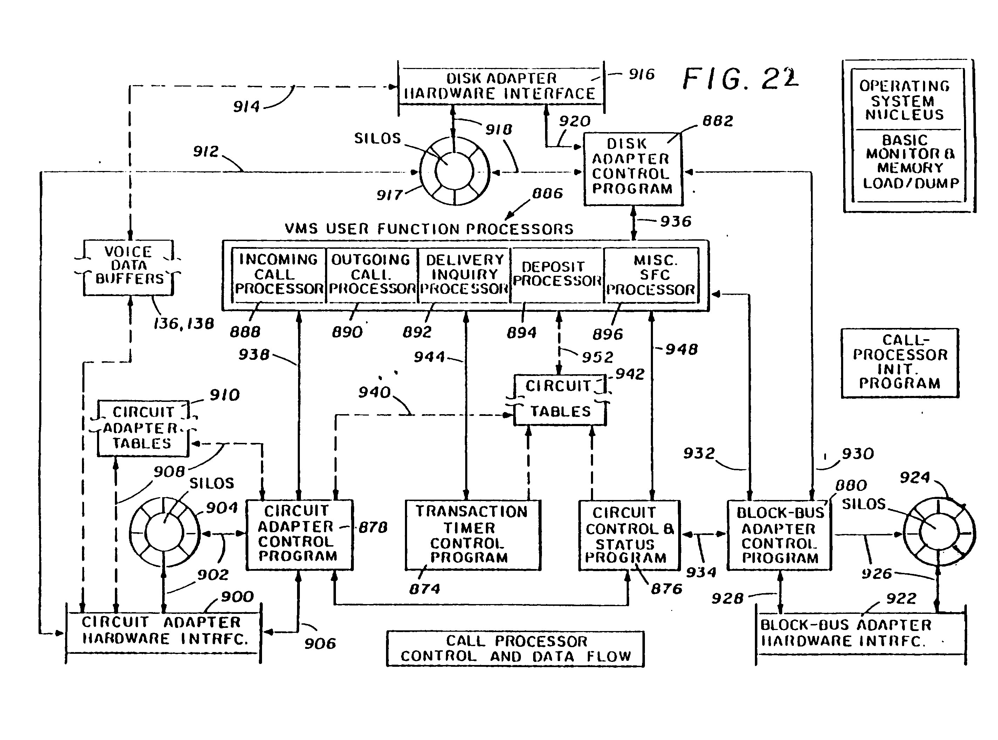

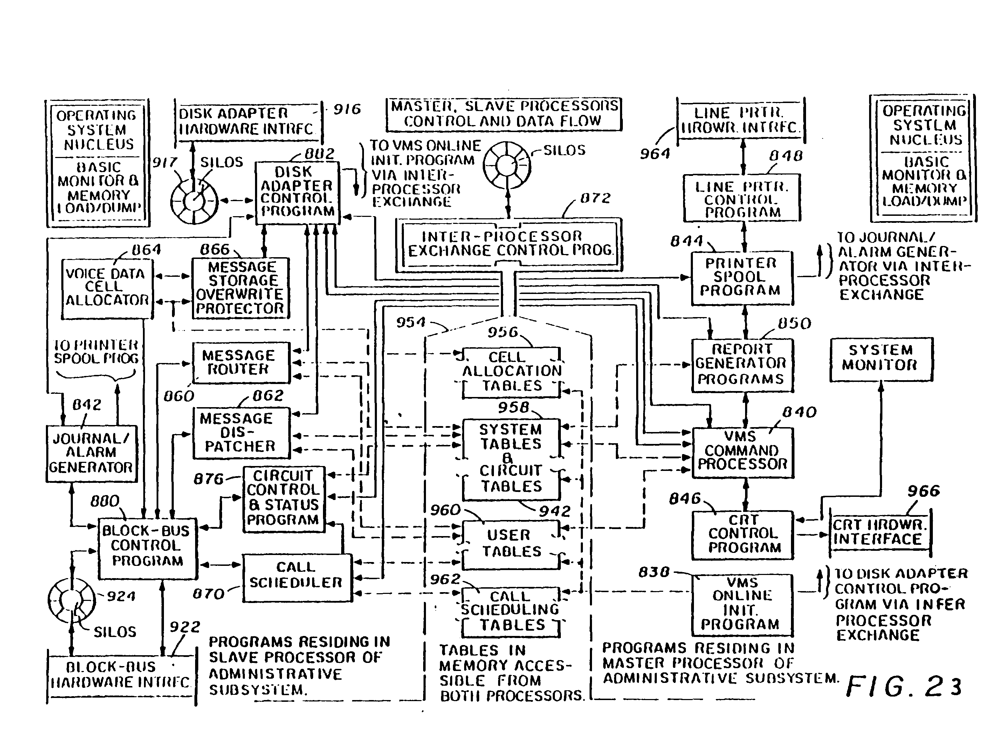

FIGURES 22 and 23 show the control and data flow of the VMS 10 online system and software. Those programs shown in FIGURE 21 that are used in an offline mode only do not appear in FIGURES 22 and 23. The solid line between programs denote paths of control flow. The dashed lines denote paths of data flow.

### Call Processor Control and Data Flow

FIGURE 22 shows the control and data flow for the programs that run in the call processor 62A-62C. All of the programs which must communicate with the voice circuit hardware do so via the Circuit Adapter Control Program 878. It is the "device handler" program for a circuit adapter hardware interface 900. Interface 902 represents the communication between this program and the circuit adapter hardware via a silo data structure 904 in shared memory. At least two silos are actually required; one for "downstream" commands from the program to the circuit controllers (via the circuit adapter), and one for status information coming "upstream" from the circuit controllers. Interface 906 represents hardware I/O commands issued by the control program directly to the circuit adapter interface. This is normally required only when the circuit adapter is being initialized after an initial program load (IPL), or after a change in the state of a silo (i.e., from an "empty" to a "not empty" state). Interface 908 represents the flow of data to/from Circuit Adapter Tables 910 and the control program 818 and hardware interface 900. These tables are used for data that is related to commands going downstream or status coming upstream. There is a separate entry in these tables for each voice circuit attached to the circuit subsystem. In summary, commands from the program 878 to the interface 900 pass through the downstream silo of silo structure 904. Status information from the interface to the program passes through the upstream silo of silo structure 904. Additional information related to the commands and status is deposited in and extracted from the adapter tables 910 by both the program and the hardware interface.

### Circuit Adapter/Disk Adapter Interface

Interface 912 and 914 represent the information flow between the Circuit Adapter hardware interface 900 and a Disk Adapter hardware interface 916. The Circuit Adapter control program 878 may issue read/write commands directly to the Disk Adapter 76 or 78 (FIGURE 4) and no related processing is required by programs running in the 80/30 call processor 70 (FIGURE 4). The Circuit Adapter program 878 accomplishes this by depositing requests for disk I/O operations directly in the Disk Adapter downstream silo of silo 917, thus bypassing the Disk Adapter Control Program 882. The disk I/O operations that may be requested by the Circuit Adapter are associated with writing/reading segments of voice messages to/from disk. The data comprising these message segments is temporarily stored in voice data buffers 136 or 138 (FIGURE 8) (in shared memory). These buffers are allocated from and released to a buffer pool that is managed by both the Disk Adapter 114, 116 and the Circuit Adapter. The memory used for these buffers is located outside the 64K address space of the Call Processor 70, and is therefore not addressable by this processor.

Disk Adapter Control Program/Hardware Interface

All programs residing in the 80/30 Call processor 90 that must perform disk I/O do so by issuing requests to the Disk Adapter Control Program 882 which, in turn, interfaces directly with the disk adapter hardware interface 916. This interface is implemented with at least one "downstream" silo and "upstream" silo (see interfaces 918 and 920). Requests for disk I/O operations are deposited by the control program into the downstream silo, and status information (usually indicating I/O request completions) is inserted into the upstream silo by the disk adapters 114, 116. Interface 920 denotes hardware I/O operations (including interrupts) that pass directly between the control program and the hardware interface. These are normally used only to initialize the disk adapters 114, 116 and to signal a change in state of a silo (for example, from "empty" to "not empty").

Block-Bus Adapter Control Program/Hardware Interface

The communication of information between programs running in the Call Processors 62A-62C (in Circuit Subsystems) and programs in the Administrative Subsystem 60 is accomplished by passing this information across the block-transfer-bus (or "Block-Bus"). Application programs interface with a block-bus adapter hardware interface 922 by issuing requests to the Block-Bus Adapter Control Program 880, which, in turn, interfaces with the adapter hardware with a silo control mechanism 924 (Interfaces 926 and 928). This mechanism is almost exactly the same as that described above for the disk adapter, and it does not need to be repeated.

Application Program Interfaces to Block-Bus Control Program

Interface 930 represents requests originating in the Disk Adapter Control Program 882 for alarm messages to be printed on the line printer 108, which will occur when disk errors are detected. Interface 932 represents all of the communication paths between the VMS User Function Processors 886 and the Slave Processor in the Administrative Subsystem 60. These include:

(1) downstream commands to originate outgoing calls,
(2) upstream notification of answered incoming calls,
(3) upstream notification when a new voice message has been received (this information is processed by the Router Program 860 in the Slave Processor, which creates the Message Control Block [MCB] for the new message, and inserts entries in the queues for the addresses of the message),
(4) downstream commands to deliver outgoing messages, and upstream notification of message delivery (this information is processed by the Message Dispatcher Program 862 in the Slave Processor, which issues commands for message delivery, and then de-queues messages after they are delivered),
(5) miscellaneous upstream requests to Slave Processor programs 810 that originate in the Special Function Code Processors 896. Interface 934 consists of upstream requests from the Circuit Control and Status Program 876 that are reporting a status change in a circuit, and downstream commands from the Slave Processor 810 that force a change in the status of a circuit.

Interfaces With User Function Processors

Interface 936 represents any requests for disk I/O that originate in the VMS User Function Processors 886.

Interface 938 represents commands originating in the User Function Processors 886 that are destined for individual voice circuits, and upstream status information that originates in the voice circuit controllers. Associated with this status information is data deposited through interface 940 by the Circuit Adapter Control Program 878 in the Circuit Tables 942.

Interface 944 represents control functions performed by the Transaction Timer Control Program 874. It consists primarily of requests to "awaken" the continuation of processing for a particular circuit when a "watchdog timer" has expired.

Interface 948 represents control function flow between the User Function Processors 886 and the Circuit Control and Status Program 876 that occur as a result of circuit status changes.

Interface 952 represents data flow between the User Function Processors 886 and the Circuit Tables 942. These tables contain entries (an "entry" is a single circuit table) for all of the voice circuits controlled by the Call Processors 62A-62C. Each circuit table, in turn, contains all of the information required for the Call Processors 62A-62C to control the circuit, and to execute the VMS functions during calls that use the circuit. Note that several programs other than the User Function Processors 886 must also access selected information in Circuit Tables 942. These are the Circuit Adapter Control Program 878, the Transaction Timer Control Program 874 and the Circuit Control and Status Program 876.

## Master and Slave Processors Control and Data Flow

FIGURE 23 shows the control and data flow for those programs residing in the master and slave processors of the administrative subsystem 60. Although these two processors run asynchronously with respect to each other, a part of their addressable memory space 954 is shared. Tables which must be accessed by programs in both processors reside in this common memory space and include cell allocation tables 956, system tables 958, circuit tables 942, user tables 960 and call scheduling tables 962.

Two programs residing in the slave processor that control hardware interfaces, the Disk Adapter Control Program 882 and the Block-Bus Control Program 880, are essentially these same programs residing in the Call Processor of FIGURE 22. These have already been discussed in the description of the control and data flow for the Call Processor, and will not be discussed again here.

## Interprocessor Exchange Control Program

The Interprocessor Exchange Control program 872 provides a mechanism for the transfer of information between programs running in the slave processor and those running in the master processor. The external interface to this program is very similar to that for the Block-Bus Control Program 880. The major internal difference is that, instead of transferring the messages between programs via the block-bus, the transfer is by way of common memory. The mechanism uses silos for inter-processor synchronization; however, there is no hardware interface like the block-bus interface involved in the process.

## Voice-Data Call Allocator and Message Overwrite Protector

The Voice-Data Call Allocator 864 services requests for allocation of voice-data storage cells that originate in the Call Procesor 62A-62C. Using data in the Cell Allocation Tables 956, disk space is allocated, and the address of this space is returned to the requesting programs. When almost all of the voice-data cells on a particular disk have been allocated, and the address of this space is returned to the requesting programs. When almost all of the voice-data cells on a particular disk have been allocated, the Message Overwrite Protector 866 is activated. This program checks for the presence of any cells still in use that reside in the storage areas that are about to be re-used or allocated again. Any such cells are "protected" by moving them. The requests for disk I/O are made by the Overwrite Protector 866 for the purpose of moving voice-data cells to the Disk Adaptor Program 882.

## Message Router

When a new message has been received and stored on disk, the appropriate Call Processor sends a request upstream to the Message Router program 860. This program performs two major functions. First, it creates the Message Control Block (MCB) from information contained in the upsteam request. The MCB contains most of the bookkeeping and control information required for subsequent processing of the message. The second function performed by the Message Router Program 860 is to deposit entries in the output queues for the addresses of the message.

## Message Dispatcher

The Message Dispatcher 862 provides Call Processor information concerning the pending delivery of an outgoing message. When the delivery process on a call has progressed to the point where delivery of an outgoing message is to begin, the Message Dispatcher 862 is notified by the appropriate Call Processor 62A-62C through Block-Bus Control Program 880. The Message Dispatcher 862 selects a message from a queue and returns information concerning the identity and location of the message to the Call Processor 62A-62C. The Dispatcher 862 always selects a message that is at the top (beginning) of a particular queue to be delivered next. If there is more than one queue to be considered (some message recipients may have more than one FIFO queue), then the selection of the queue is made on a priority basis. The Call Processor 62A-62C will again notify the Dispatcher 862 after it has successfully delivered the selected message. The Dispatcher 862 will respond by dequeueing this message, and selecting another message for delivery. If there are no additional messages awaiting delivery, then the Dispatcher 862 informs the Call Processor 62A-62C that the queues for this addressee are empty.

## Circuit Control

The Circuit Control and Status Program 878 communicate with one of the Call Processors 62A-62C via Block-bus 880. Communication across this interface occurs for the following types of events:

(1) Circuit Control is notified when an autonomous change in the status of a circuit occurs. The new state is duly recorded in the Circuit Tables 942, and if the new state is an "abnormal" one (such as circuit out of service), a request is sent to the Journal/Alarm Program 842 to generate an appropriate alarm message.

(2) Circuit Control is also notified when a circuit autonomously goes off-hook (an incoming call is answered), and when a disconnect occurs on an existing call.

(3) Circuit Control interfaces with the VMS Command Processor Program 846 (in the master processor) for operator commands which dictate changes in the state of a voice circuit.

In these cases Circuit Control will update the appropriate items in the System Tables 958 and Circuit Tables 942, and, if necessary, the appropriate commands downstream to the affected Call Processor 62A-62C.

## Call Scheduler

The Call Scheduler 870 is responsible for the scheduling of outgoing calls to message addresses. It uses information recorded in the User Tables 960 and Call Scheduling Tables 962 to decide when to initiate a call. The actual request to initiate a call is sent to the Circuit Control and Status program 876.

## Journal/Alarm Generator

The Journal/Alarm Generator 842 receives requests for specific journal or alarm messages that are to be "logged" on the system line printer 108. It formats the messages, and then passes them to the Printer Spool Program 844 in the master processor.

## Line Printer Control and Printer Spool Programs

When the VMS system 10 is operating online, all requests for the printing of information on the line printer 108 are sent to the Printer Spool Program. These requests originate in the Journal/Alarm Generator 842 and the Report Generator Programs 850. The Spool Program 844 "buffers" these requests by writing them on the disks. It then schedules the print requests in an orderly manner to the Line Printer Control Program 848. This program, in turn, directly controls the line printer hardware interface 964.

## Report Generator Programs

The requests for the different types of reports originate directly, or indirectly, in the VMS Command Processor Program 840. The direct requests are caused by VMS commands that explicitly request the generation of a specific report. The indirect requests are caused by VMS commands that set the time-of-day and time intervals for generation of specific reports. These reports are then created on a time-periodic basis. Most of the information required for creating a report is contained in the System Tables 958 and Circuit Tables 942.

## VMS Command Processor

This program receives system operator commands from the CRT Control Program 846, performs the function requested by the command, and returns a response to the operator. Some of these command functions have already been discussed, such as report generation requests and circuit control requests. Other commands are requests for various types of status information. The Command Processor 840 extracts this information from the System Tables 958 and Circuit Tables 942 and the User Tables 960.

## Console CRT Control Program

This is a "device handler" program which directly controls the CRT hardware interface 966. It acepts read and write requests for the CRT 104.

## VMS Online Initializer

The VMS Online Initializer program 838 performs a variety of functions that are required to bring the system into an online state. To do this it must access information from the following tables shown in shared memory 954:

(1) the Cell Allocation Table 956,

(2) the System Tables 958 and Circuit Tables 942,
(3) the User Tables 960, and
(4) the Call Scheduling Tables 962.

At least a portion of the information in each of the above tables, the portion accessed by the Initializer, is maintained in non-volatile memory so that it is not destroyed when system power is removed.

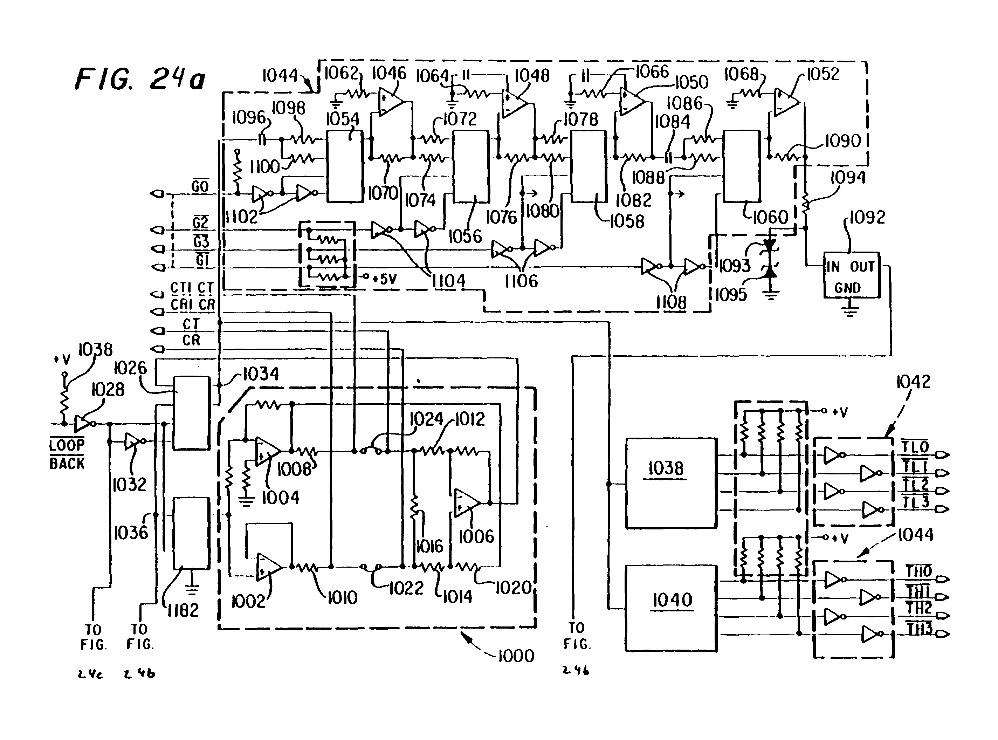

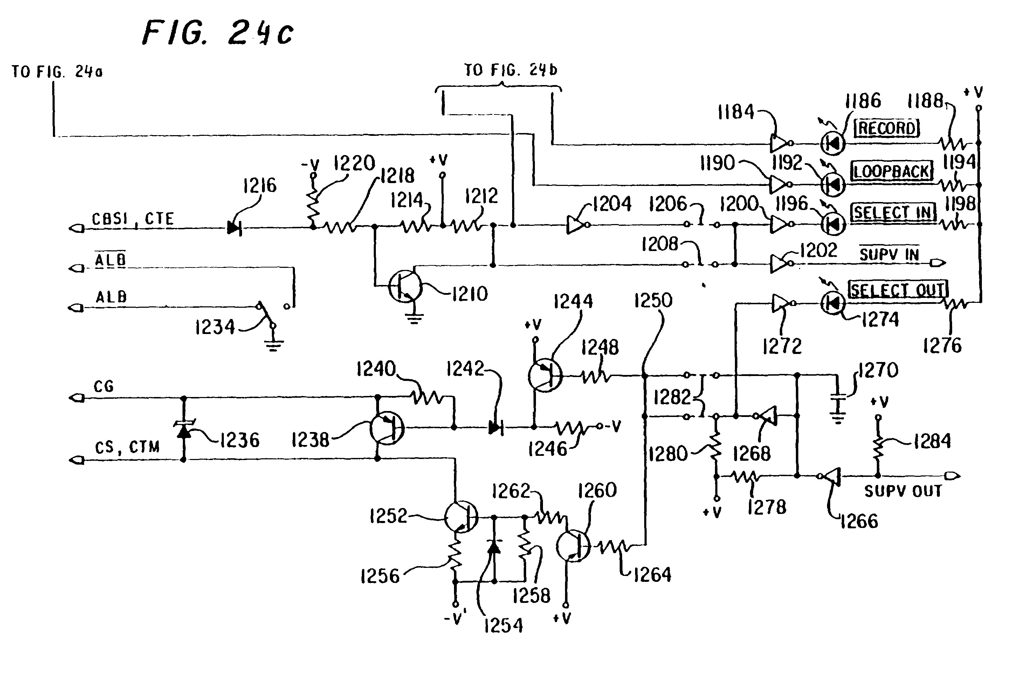

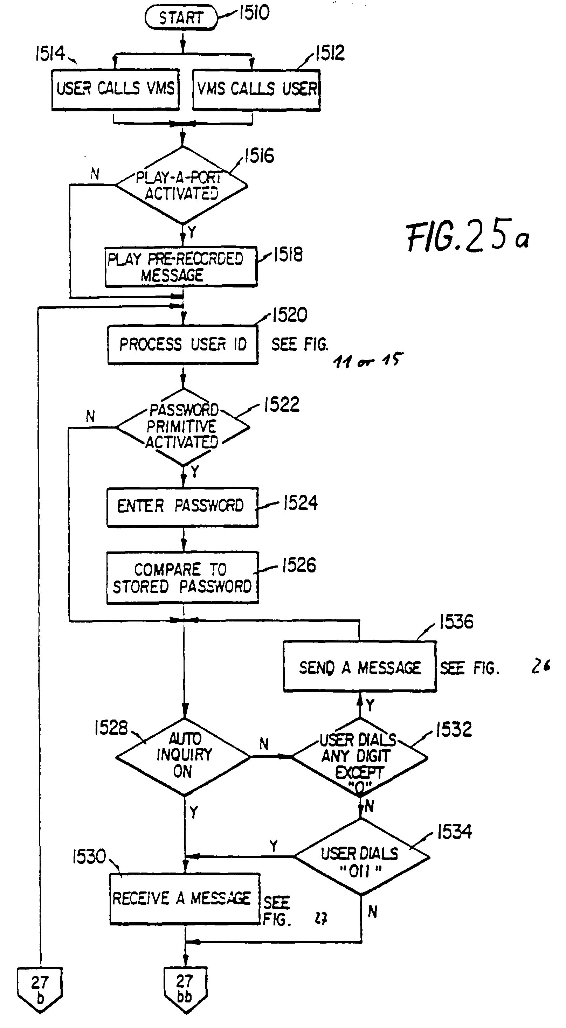

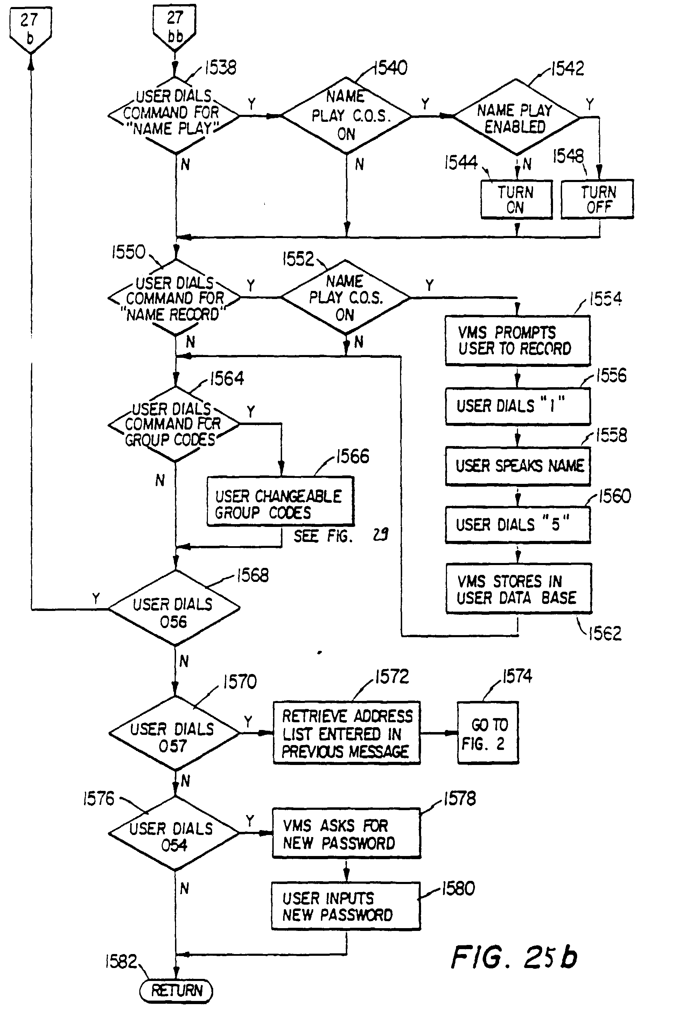

Referring now to Figure 24a-24c, there is illustrated a schematic diagram of a portion of the Codec illustrated in Figure 9. The schematic diagram refers to the portion of the Codec that converts the analog to the digital and the digital to the analog. The schematic diagrams of Figure 25 also include the tone receiver 164 and the tone generator 166 of Figure 9 that convert a digital signal to a DTMF digit and also convert a DTMF digit back to a digital word. The VCA interface logic 156 of Figure 9 now outputs a tip and ring signal which is input to the circuit of Figure 24a on the connectors labeled CT1, CR and CR1, CR. This is for two-wire transmission only. The situation where four-wire transmission is allowed by the telephone company will be described hereinbelow.

The tip and ring signals are input to a signal conditioning circuit 1000 which is comprised of operational amplifiers 1002, 1004 and 1106 (hereinafter referred to as op amps). Op amp 1002 is configured as a unity gain noninverting amplifier by connecting the negative input thereof to the output thereof. The op amp 1004 is configured as an inverting amplifier. The components attached to the input terminals and the output terminal of op amp 1004 have values determined by the desired gain. These values can be determined from design equations that are found in the Linear Applications Handbook from National Semiconductors Corp. In the present application, the gain of the op amp 1004 is set for unity gain.

The output of op amp 1004 is connected to the CT1, CT input line by a resistor 1008. The output of op amp 1002 is connected to the input line CR1, CT through a resistor 1010. The resistors 1008 and 1010 are buffer resistors and provide a certain degree of isolation between the outputs of the op amps 1002 and 1004 and the lines CR1, CR and CT1, CT. In the configuration shown, op amps 1002 and 1004, both having unity gain, form a complimentary amplifier. This complimentary amplifier is used to drive the telephone line which is connected to the lines CT1, CT and CR1, CR. The impedence of the telephone line is 600 ohms.

Op amp 1006 is configured as a differential amplifier having the positive input thereof connected through a resistor 1012 to the CT1, CT terminal and the positive input thereof connected through a resistor 1014 to the CR1, CR terminal. The gain of the differential amplifier is set equal to unity for the present application and it functions as a receiver to receive signals from the telephone line. A resistor 1016 is connected between the terminal CT1, CT and CR1, CR. The output of the op amp 1004 is connected through a resistor 1020 to the positive input of the op amp 106. The resistor 1020 acts as a summing resistor to allow the output of the op amp 1004 to sum with the difference signal detected by the op amp 1006. The resistor 1020 in effect subtracts or cancels the two signals at the positive input of the op amp 1006. The purpose of the resistor 1020 is to reduce or eliminate transmitted signals output by op amps 1002 and 1004 from appearing on the output of op amp 1006.

A jumper 1022 and a jumper 1024 are connected between the resistors 1010 and 1014 and the resistors 1008 and 1012, respectively. The purpose of the jumpers 1022 and 1024 is to accommodate four-wire telephone lines. The four-wire telephone line makes provisions for transmission on two of the four wires and reception on the remaining two wires thereby providing increased isolation. In a four-wire system, the transmission occurs on the terminal CT1, CT and CR1, CR and reception occurs on the input terminals CT and CR which are connected to the opposite sides of the jumpers 1022 and 1024 from the terminals CT1, CT and CR1, CR.

The output of the op amp 1006 is connected to one input of a dual analog gate 1026. The analog gate 1026 is of the type 7G201 manufactured by Siliconix, Inc. An inverter 1028 has the input thereof connected to a signal line labeled LOOP BACK and the output thereof is connected to one of the control inputs of the analog gate 1026 and controls the connection of the output of the op amp 1006 to the output of the analog gate 1026. A pullup resistor 1030 is connected between the input of the inverter 1028 and the positive supply voltage. An inverter 1032 has the output thereof connected to the other control input of the analog gate 1026 and input therof connected to the output of the inverter 1028. The two outputs of the dual analog gate 1026 are connected to a node 1034 and the inverters 1028 and 1032 are operable to selectively connect one of the inputs of the dual analog gate 1026 to the node 1034. The other input of the analog gate 1026 is connected to a node 1036.

A DTMF receiver 1038 and a DTMF receiver 1040 have the input thereof connected to the node 1034. The DTMF receivers are operable to receive the received analog signal and, if DTMF signals are present, discriminate the signals into logic signals corresponding to the various tones. The receivers 1038 and 1040 output a separate digit for each of eight discrete tones. The eight tones are 697 Hz, 770 Hz, 852 Hz, 941 Hz, 1209 Hz, 1336 Hz, 1477 Hz, and 1633 Hz. The receivers 1038 and 1040 are of the type 550 manufactured by Frequency Devices Inc. The presence of the four lower frequencies are operable to individually activate one of the four outputs of the receiver 1038. The four outputs of the receiver 1038 are inverted by a group of inverters 1042 to provide the signals $\overline{TLO}$, $\overline{TL1}$, $\overline{TL2}$, and $\overline{TL3}$, which correspond to increasing frequencies. The four digital outputs of the receiver 1040 are individual activated by the four higher frequencies and these outputs are inverted by a group of four inverters 1044 to provide the output signals $\overline{TH0}$, $\overline{TH1}$, $\overline{TH2}$, and $\overline{TH3}$. The output $\overline{TL0}$-$\overline{TL3}$ are the low tone digital outputs of the DTMF and the outputs $\overline{THO}$-$\overline{TH3}$ are the high tone digital outputs. The outputs provide a digital signal that are input to the circuit of Figure 8.

A programmable gain amplifier 1044 is comprised of op amps 1046, 1048, 1050 and 1052. Each of the op amps 1046-1052 is configured as an inverting amplifier having a gain specified by the components attached thereto. The gain of each of the op amp circuits is controlled by a series of four dual analog gates 1054, 1056, 1058, and 1060 similar in type to the analog gate 1026. Each of the dual analog gates 1054-1060 have both outputs connected together and each of the outputs are connected to the negative input of each of the op amps 1046-1052, respectively. The positive input of the op amp 1048 is connected to ground through a resistor 1064. The op amp 1050 has the positive input thereof connected to ground through a resistor 1066. The op amp 1052 has the positive input thereof connected to ground through a resistor 1068. The output of the op amp 1046 is connected to the negative input thereof through a series resistor 1070 and connected to the first and second inputs of the dual analog gate 1056 through resistors 1072 and 1074, respectively. The op amp 1048 has the output connected to the negative input thereof through a series resistor 1076 and connected to both inputs of the dual analog gate 1058 through series resistors 1078 and 1080, respectively. The op amp 1050 has the output thereof connected to the negative input thereof through a series resistor 1082 and to the input of a capacitor 1084. The other end of the capacitor 1084 is connected to both inputs of the dual analog gate 1060 through series resistor 1086 and 1088, respectively.

The op amp 1052 has the output thereof connected to the negative input thereof through a series resistor 1994. A zener diode 1093 has the cathode thereof connected to the cathode of a zener diode 1095 and the anode thereof connected to the input of the filter 1092. The anode of the diode 1095 is connected to ground. Diodes 1093 and 1095 provide a limiting function for the input of the filter 1092. The filter 1092 reduces some of the high frequency components to allow conversion to digital signals. It is of the type 28-1637 manufactured by Alladdin. The node 1034 is connected to one side of a capacitor 1096 and the other end of the capacitor is connected to both inputs of the dual analog gate through series resistors 1098 and 1100, respectively.

A digital signal $\overline{G0}$ is connected to the control inputs of the dual analog date 1054 by a serially connected pair of inverters 1102. The serially connected inverters 1102 provide both the inverted and noninverted forms of the signal $\overline{G0}$. This allows the signal $\overline{G0}$ to control the operation of the digital analog gate 1054. In this manner, the analog signal passed through the capacitor 1096 is input to the op amp 1046 through a selected one of the resistors 1098 and 1100 depending upon the state of the signal $\overline{G0}$. A digital signal $\overline{G2}$ is connected to the control inputs of the analog gate 1056 by a serially connected pair of inverters 1104. the capacitor 1096 is input to the op amp 1046 through a selected one of the resistors 1098 and 1100 depending upon the state of the signal $\overline{G0}$. A digital signal $\overline{G2}$ is connected to the control inputs of the analog gate 1056 by a serially connected pair of inverters 1104. A digital signal $\overline{G3}$ is connected to the control inputs of the analog gate 1058 by a pair of serially connected inverters 1106. A digital signal G1 is connected to the control inputs of the analog gate 1060 through a pair of serially connected inverters 1108. The digital signals $\overline{G1}$-$\overline{G3}$ control the operation of the analog gates 1056-1060 in a manner similar to the control of the analog gate 1054 by the signal $\overline{G0}$.

The operation of each of the op amps 1046 and the gain thereof will be described with reference to only the op amp 1046. The op amp 1046 is connected as an inverting amplifier with the resistor 1070 serving as the feedback resistor and the resistors 1062 and one of the resistors 1098 and 1100 serving as the gain select resistors. The analog gate 1054 selects which of; the resistors 1098 or 1100 are to be part of the gain circuit. The values of these resistors can be selected according to design equations that can be found in the Linear Applications Handbook published by National Semiconductor Corporation. Depending upon the state of the signal G0, resistor 1098 or resistor 1100 can be selectively connected to the negative input of the op amp 1046 to comprise one leg of the gain circuit. This provides two degrees of freedom in choosing the gain of the amplifier. The resistor 1070 has a value equal to the value of one of the resistors 1100 and 1098 such that a gain can be set to unity. Therefore, the gain of the amplifier circuit can be either unity or higher depending upon the value of the remaining resistor of the pair connected to the input of the analog gate 1054. Each of the op amp circuits 1048, 1050 and 1052 operate in a similar manner, thereby providing 16 levels of gain depending upon the signals $\overline{G0}$-$\overline{G3}$. In the present application, the gain range is from 0 to 60 Db in increments of approximately 4 Db.

The output of the filter 1092 is connected to the positive input of a comparator 1110 through a series capacitor 1112. The positive input of the comparator 1110 is connected to the positive voltage supply through a resistor 1114. The negative input of the comparator 1110 is connected to the output of a digital to analog converter (D/A) 1116. The output of the comparator 1110 is connected to the positive voltage supply through a pullup resistor 1118. The comparator 1110 is of the type LM311 manufactured by National Semiconductors Corp.

The D/A converter 1116 is a general purpose 10 bit device which is operable to receive 10 bits of information from the Delta modulator 150 of Figure 9 and convert this digital information to analog signals. The digital word is input on the line labeled D0-D9 and inverted by a series of ten inverters 1120. The inverters 1120 each have the input thereof connected to one of the data lines $\overline{D0}$-$\overline{D9}$ and the outputs thereof connected to one of the ten inputs of the D/A converter 1116. Each of the inverters 1120 have the inputs thereof connected to one of a plurality of resistors in a resistor bank 1120, each of the resistors having the other and attached to the positive voltage supply. The resistors 1120 perform a pullup function for the input of the inverter 1120. The D/A converter 1116 outputs an audio signal in response to a digital signal input from the bus on the data lines $\overline{D0}$-$\overline{D9}$ and this audio signal is input to the negative input of the comparator 1110. The comparator 1110 compares the output of the D/A converter 1116 and the output of the filter 1092 to output a signal DATA OUT.

When the signal is being received off of the telephone line and an analog signal is output from the filter 1092 having an amplitude determined by the gain of the programmable gain amplifier 1044, the system generates another signal on the data lines $\overline{D0}$-$\overline{D9}$ which is output by the D/A converter 1116 for comparison. This is a correction signal that is generated in response to signal that the system thinks is present. This drives the digital portion of the Delta modulator 150 of Figure 9 to adjust its digital value to the converter 1116 for the next sample. It should be understood that when the analog to digital conversion is not performed on the circuit shown in Figures 24A-C, an analog signal must be sampled in order to convert it to a digital representation. The compensation is performed for each sample to compensate the quality of the sound and the rate of this sampling is many times faster than the frequencies present in voice of information.

The output of the filter 1092 is also connected through a resistor 1124 to the input of a peak detector 1126. The peak detector 1126 utilizes a general purpose op amp to perform the detection by connecting the output to the negative input thereof through a series connected diode 1125 and resistor 1127 and tapping the output off of the negative input thereof. A five-bit level detector IC 1128 has the input there connected to the output of the level detector 1126 and each of the five outputs thereof connected to the input of an individual one of a series of five AND gates 1130 configured as buffers. Each of the outputs of the AND gates 1130 are labeled $\overline{L0}$, $\overline{L1}$, $\overline{L2}$, $\overline{L3}$, and $\overline{L4}$ and represent various levels for the audio signal. A series of pullup resistors 1132 connect each of the five outputs of the level detector 1128 to the positive voltage supply through a single resistor. The output of the five bit level detector outputs a digital bit on each output in a sequential fashion dependent upon the input analog level such that the lowest level corresponds to the signal $\overline{L0}$ and the highest level corresponds to the signal $\overline{L4}$. The IC 1128 is of the type TL489 manufactured by Texas Instruments Inc. An AND gate 1134 configured as a buffer has the input thereof connected to $\overline{L0}$ from the level detector 1128, an identically configured AND gate 1136 has the input thereof connected to $\overline{L2}$ from the level detector 1128 and an identically configured AND gate 1138 has the input thereof connected to $\overline{L4}$ from the level detector 1128. Each of the AND gates 1134-1138 have the outputs thereof connected to the cathode of a light-emitting diode (LED) 1140, 1142, 1144, respectively. Each of the LEDs 1140-1144 are connected to the positive voltage supply through a pullup resistor 1146, 1148, and 1150, respectively. LED 1144 indicates that the audio level is low, LED 1142 indicates that the audio level is medium, and the LED 1140 indicates that the audio level is high. The LED's are located physically on the front panel of the system so as to inform an operator of the condition of the audio level.

A tone generator 1152 receives digital information from the bus described above and generates an output DTMF signal on an output node 1154. The tone generator 1152 is of the type MK5089 manufactured by Mostek, Incorporated. The tone generator 1152 has the capability of producing eight different tones. These tones can be produced one at a time or two at a time. There are a series of high-frequency tones and low-frequency tones, the frequency of which were described hereinabove with reference to the receivers 1038 and 1040. The digital signals for the high-frequency tones are received on the data lines $\overline{R0}$, $\overline{R1}$, $\overline{R2}$, and $\overline{R3}$. The data lines $\overline{C0}$-$\overline{C3}$ and $\overline{R0}$-$\overline{R3}$ are buffered by a series of AND gates that have the individual inputs thereof connected to the respective data line and the outputs thereof connected to a corresponding individual input of the tone generator 1152. The frequency of the tones on the tone generator 1152 are controlled by a crystal 1156.

The output node 1154 is connected through a capacitor 1158 and through a series resistor 1160 to the negative input of an op amp 1162. The op amp 1162 is part of the signal conditioning circuit 1000, as indicated by the dashed line. A resistor 1164 is connected between the output and the negative input of the op amp 1162. A resistor 1166 is connected between the positive input of the op amp 162 and ground. The resistors 1160, 1164 and 1166 in conjunction with the op amp 1162 form a unity gain inverting amplifier. A resistor 1168 is connected between the output of an analog gate 1170 and the negative input of the op amp 1162. The resistor 1168 in conjunction with the remaining resistors 1164 and 166 results in a higher gain for the amplifier than that using the resistor 1160. The overall amplifier circuit utilizing the op amp 1162 is a summing amplifier with resistors 1160 and 1168 serving as the summing resistors which sums the output of the analog gate 1170 and the tone generator 1152. The input to the analog gate 1170 is connected to the output of the D/A converter 1116 through a capacitor 1172. A resistor 1174 is connected between the input of the analog gate 1170 and ground. An inverter 1176 has the input thereof connected to a DECODE/$\overline{\text{ENCODE}}$ line and the output thereof connected to the control input of the analog gate 1170. The signal on the DECODE/$\overline{\text{ENCODE}}$ line is operable to sum the output of the D/A converter 1116 with the output of the generator 1152. The circuit the op amp 1162 performs a mixing function for the two outputs.

The output of the op amp 1162 is connected through a resistor 1178 to a filter 1180. The filter 1180 is similar to the filter 1092 and functions to filter out high frequency components of the D/A converter 1116 and the tone generator 1152. The output of the filter 1180 is connected to the input of an analog gate 1182 at the node 1036. The control input of the analog gate 1182 is connected to the output of the inverter 1028 and is controlled by the $\overline{LOOP}$ $\overline{BACK}$ signal.

In the encode mode, the analog gate 1170 connects the output of the D/A converter 1116 through the op amp 1162 on the signal conditioning board 1000 to the input of the analog gate 1182. When the analog gate 1182 is activated, the signals from the D/A converter 1116 are transmitted to the input of the op amps 1104 and 1102 along with the output of the tone generator 1152 and from there to the telephone line. In the decode mode, information from the D/A convertor is not mixed with the output of the tone generator 1152.

The analog gates 1026 and 1182 are operable to respond to the $\overline{LOOP}$ $\overline{BACK}$ signal to remove signals internal to the analog board from the telphone lines for purposes such as testing. When the $\overline{LOOP}$ $\overline{BACK}$ function is activated, the analog gate 1182 is deactivated to prevent signals from inputting to the signal conditioning circuit 1000. The dual analog gate 1026 has the analog gate connecting the output of the signal conditioning circuit 1000 to the programmable gain amplifies 1044 deactivated and the remaining gate therein activated to connect the output of the filter 1180 to the programmable gain amplifier 1044. This effectively connects the output of the op amp 1162 to the programmable gain amplifies 1044 which comprises the mixed signals from the tone generator 1152 and the D/A converter 1116.

An inverter 1184 has the input thereof connected to the output of the inverter 1176 and the output thereof connected to the cathode of an LED 1186 to provide a buffer for driving the LED 1186. The anode of the LED 1186 is connected to the positive voltage supply through a resitor 1188. The DECODE/$\overline{ENCODE}$ signal, in addition to controlling the gate input of the analog gate 1170, also drive the LED 1186 to indicate on the front panel if the system is in the encode mode which is the mode wherein a message is recorded. An inverter 1190 has the input thereof connected to the output of the inverter 1028 and the output thereof connected to the cathode of an LED 1192. The anode of the LED 1192 is connected through a resistor 1194 to the positive voltage supply. The LED 1192 indicates when the $\overline{LOOP}$ $\overline{BACK}$ signal is present.

An LED 1196 has the anode thereof connected to the positive voltage supply through a series resistor 1198 and the cathode thereof connected to the output of an inverter 1200. The LED 1196 indicates the select in function on the front panel of the system. The input of the inverter 1200 is also connected to the input of an inverter 1202 that outputs the $\overline{SUPV}$ $\overline{IN}$ signal. The input of the inverters 1200 and 1202 are connected to either the input or the output of an inverter 1204 by selectively connecting one of two jumpers 1206 and 1208, as indicated by the dashed lines. The input of the inverter 1204 is connected to the collector of a transistor 1210, the emitter of which is connected to ground. The collector of the transistor 1210 is connected to the positive voltage supply through a resistor 1212 and the base of the transistor 1210 is also connected to the positive voltage supply through a resistor 1214. A control signal CBS1, CTE, which is derived from the VCA 16, is input to the anode of a diode 1216, the cathode of which is connected to the base of the transistor 1210 through a series resistor 1218. The cathode of the diode 1216 is also connected to the negative voltage supply through a resistor 1220. The diode 1216 and the transistor 1210 with its associated components convert the signal input to the drive the various inverters and logic that is normally comprised of TTL logic. The positive voltage supply is normally + 5 volts for this type of logic. The jumpers 1206 and 1208 allow for positive or negative signalling to the input of the inverters 1200 and 1202.

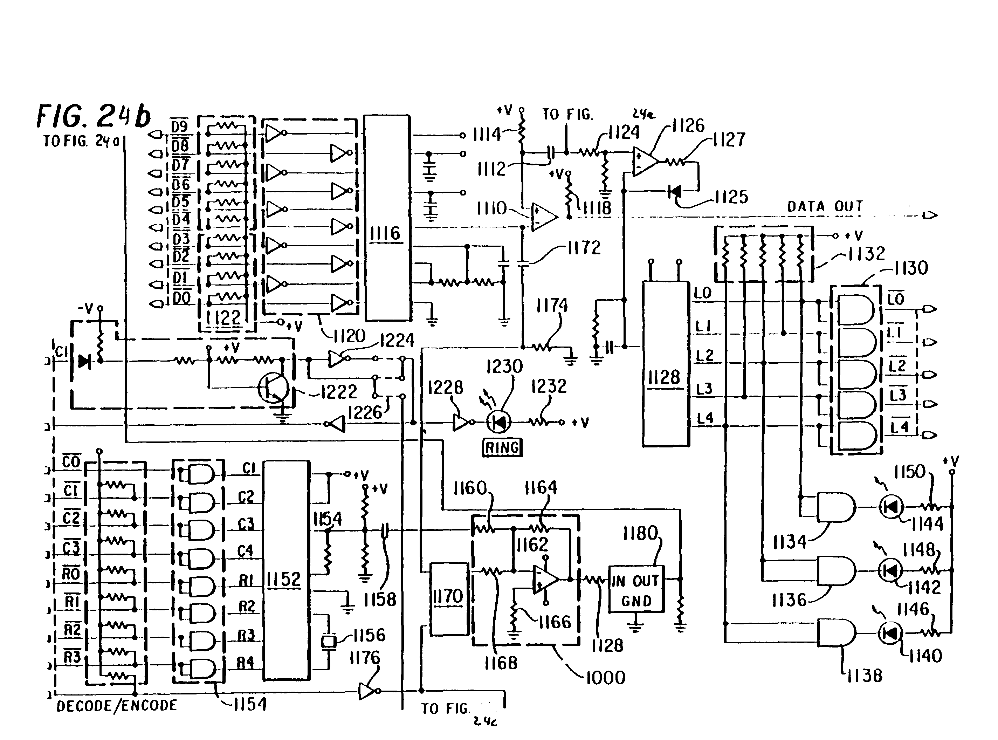

Referring to figure 24b, a circuit 1222 converts a negative voltage signalling to a positive voltage signalling similar to the conversion afforded by the transistor 1210, the diode 1216 and the resistors 1212, 1214, 1218, and 1220. The signal input to the circuit 1120 is labeled C1 and is derived from the VCA board 16 and indicates when the VCA 16 detects a ring signal. The output of the circuit 1222 is connected to the input of an inverter 1224 and a series of jumpers 1226 are utilized to connect either the input of the 1224 or the output of the inverter 1224 to the input of an inverter 1228. The output of the inverter 1224 to the input of an inverter 1228. The output of the inverter 1224 to the input of an inverter 1228. The output of the inverter 1228 is connected to the cathode of an LED 1230 and the anode of the LED 1230 and the anode of the LED 1230 is connected to the positive voltage supply through a resistor 1232. The LED 1230 indicates the presence of a ring signal and is labeled RING. The jumpers 1126 are operable to connect the detected RING signal to the input of the inverter 1204 to provide the noninverted signal.

A switch 1234 is operable to generate an alarm busy signal ALB. It is also used for maintenance mode operations. The switch 1234 in one position puts on an ALB signal and in the other position puts out the inverted ALB signal. This signal is input to the VCA 16 and forces a BUSY condition so that the line is busied, it also sends a signal to the circuit microboard of Figure 8 which enables an operator to simulate an incoming call and do on-board testing.

Referring to Figure 24C, a transient suppressor diode 1236 has the cathode thereof connected to the input line labled CG and the anode thereof connected to the input line labeled CS, CTM. A PNP transistor 1238 has the emitter thereof connected to the cathode of the diode 1236 and the collector thereof connected to the anode of the diode 1236. A resistor 1240 is connected between the emitter and the base of the transistor 1238. A diode 1242 has the anode therof connected to the base and the cathode thereof connected to the collector of a PNP transistor 1244. The collector of the transistor 1244 is connected to the negative voltage supply through a resistor 1246 and the emitter thereof is connected to the positive voltage supply. A resistor 1248 connects te base of the transistor 1244 to anode 1250.

A transistor 1252 has the collector thereof connected to the collector thereof connected to a negative voltage supply -V' through a resistor 1256. The base of the transistor 1252 is connected to -V' through a resistor 1258 and the anode of the diode is also connected to -V'. A PNP transistor 1260 has the emitter thereof connected to the positive voltage supply, the collector thereof connected to the base of the transistor 1252 through a resitor 1262 and the base thereof connected to the node 1250 through a resistor 1264. The transistors 1238 and 1244 and the diode 1242 form a circuit that converts positive voltage supply signalling that is output by TTL logic to a signalling voltage in the range of -24 volts. The transistors 1252 and 1260 with their associated circuitry provide a source for the signal to the -V' voltage level.

A signal input line labelled SUPV OUT is connected to the input of an inverter 1266. A resistor 1284 has one end hereof connected to the input of the inverter 1266 and the other end thereof connected to the positive voltage supply to provide a pullup function. The output of the inverter is input to the input of an inverter 1268 and one end of a capacitor 1270. The other end of the capacitor 1270 is connected to the ground. The output of the inverter 1268 is connected to the input of an inverter 1272. The output of the inverter 1272 is connected to the cathode of an LED 1274 and the anode thereof is connected to the positive voltage supply through a resistor 1276. The LED 1274 gives and indication of the SELECT OUT function that is on the front panel. Resistors 1278 and 1280 connect the outputs of the inverters 1266 and 1268 to the positive voltage supply, respectively. A pair of jumpers 1282 allow for selection of the inverted or noninverted function for input to the base of the transistor 1244 for conversion to -24V signalling.

Referring now to FIGURE 25, there is illustrated a flow chart for an alternate embodiment of the VMS system for sending and receiving messages and setting up the various primitives, as will be described hereinbelow. The flow chart is initiated with a START block 1510 and then proceeds along two branches to either a function block 1512 labeled VMS CALLS USER or a function block 1514 labeled USER CALLS VMS. The function block 1514 is utilized whenever a user desires access to the VMS system to either send or receive a message. The function block 1512 is utilized whenever VMS calls the user. As will be described hereinbelow, there are certain circumstances in which VMS takes the initiative of calling a user to deliver the message without the user having to retrieve the deposited message.

Play-a-Port

After the connection between VMS and the user has been achieved, the program flows to a decision block 1516 to decide whether a PLAY-A-PORT feature has been activated. The PLAY-A-PORT feature is a system parameter that is controlled by the system operator to deposit general messages for transmission to each user in the user's data base whenever a telephone connection is made. For example, it may be necessary to service the system and a prerecorded message is output to each user upon access to the system, such as "Hello, this is VMS. We are sorry but the system will be down on (date) for service". This feature is also useful for announcing daily messages to the users regarding such items as stock quotes, recently implemented and future VMS features and anything else that would constitute a daily or periodic announcement. If the PLAY-A-PORT feature is activated, the program flows along the "Y" path to a function block 1518 and the prerecorded message is played for the user's benefit. If the feature is not activated, the program follows the "N" path to bypass the function block 1518.

Password

The next step in the flow chart is to proceed to a function block 1520 wherein the user I.D. is processed. When VMS calls the user, the user I.D. is processed by the procedure depicted in the flow chart illustrated in FIGURE 16 and when the user calls VMS, the user I.D. is processed by the procedure depicted in the flow chart in FIGURE 12. After the user I.D. is processed, the program flows to a decision block 1522 to inquire whether the password primitive has been activated. As will be described hereinbelow, primitives are features of a system that a user is afforded to either expand or restrict his particular voice mailbox Class of Service (C.O.S.). The user purchases a general C.O.S. that contains the various primitives that are available to the user. However, there are many different C.O.S.'s available, each with its own set of primitives.

A password is similar to a user I.D. in that it affords the user access to the system. However, the password is only known to the user and to no one else. The user's I.D. number is normally given to him by a system administrator who, along with several other people, have access to the user's I.D. The password, on the contrary, is entered only by the user and only the user has knowledge of the password. It the password primitive has been activated in a function block described hereinbelow, the program flows along the "Y" path to a function block 1524 wherein the password is entered. After the password is entered, the program flows to a function block 1526 and the password is compared to the previously entered and stored password (described hereinbelow). Although not shown, an invalid password will cause the program to return to the input of the function block 1524 whereas a valid password advances the program to a decision block 1528. If the password primitive has not been activated, the program flows along the "N" path of the decision block 1522 to the input of the decision block 1528.

Auto Inquiry

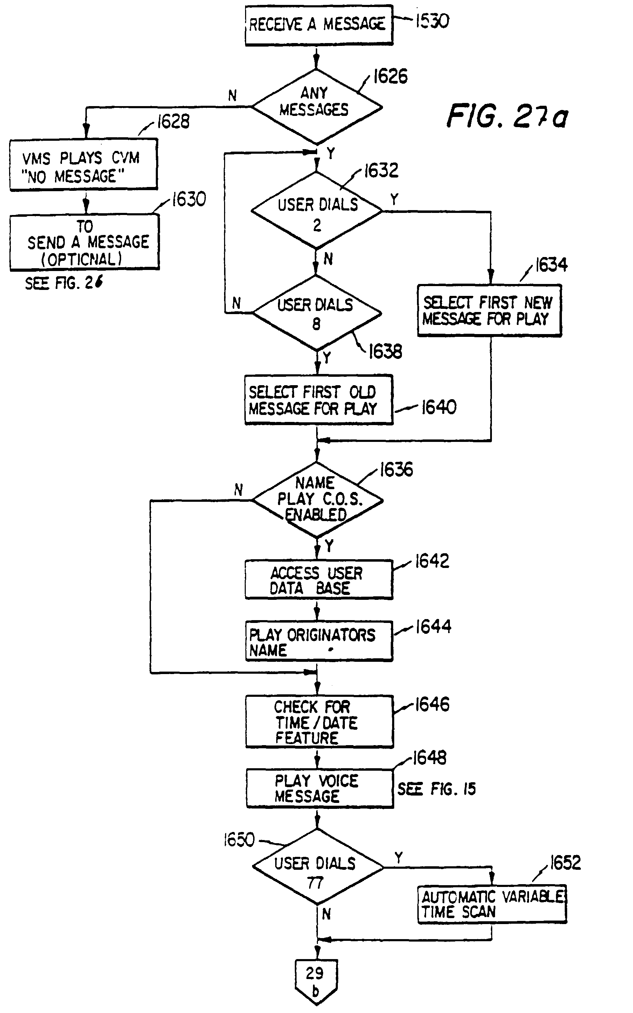

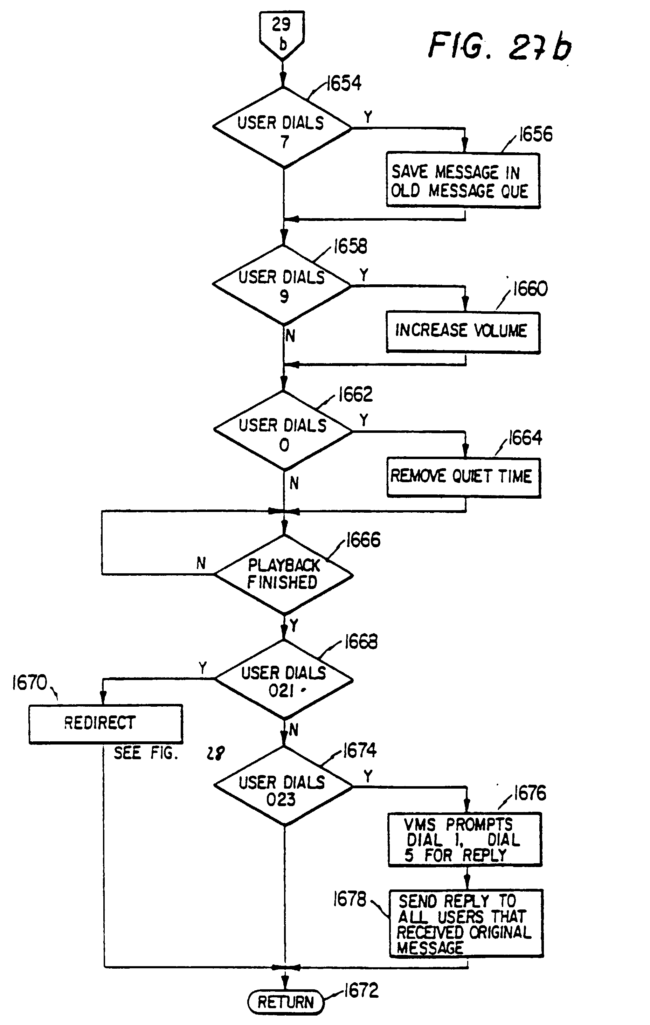

The decision block 1528 decides whether the AUTO INQUIRY function is activated. AUTO INQUIRY is a primitive of the user's C.O.S. and enables the user to automatically bypass the requirement for inputting a Special Function Code (SFC) to receive messages. If AUTO INQUIRY is turned on, the flow chart proceeds along the "Y" path to a function block 1530 labeled RECEIVE A MESSAGE which will be described hereinbelow with reference to FIGURE 27. If AUTO INQUIRY is not on, the program flows along the "N" path to a decision block 1532 to decide if the user has dialed any digit except "0". If the user has dialed "0", the program flows along the "N" path to a decision block 1534. The decision block 1534 decides whether the user has dialed the digits "011". If the digits "011" have been dialed, the program proceeds along the "Y" path to the input of the function block 1530 to enable the user to receive messages. If the user has dialed digits other than "011", the program returns along the "N" path thereof. The decision blocks 1532 and 1534 are the primary logic steps that the AUTO INQUIRY feature in decision block 1528 eliminates and, as such, the need to dial "011" to receive messages that are deposited is eliminated by AUTO INQUIRY. When AUTO INQUIRY is activated, after the user I.D. has been processed and a possible password entered, VMS automatically checks to see if there have been any messages deposited for the user, as will be described hereinbelow with reference to FIGURE 27.

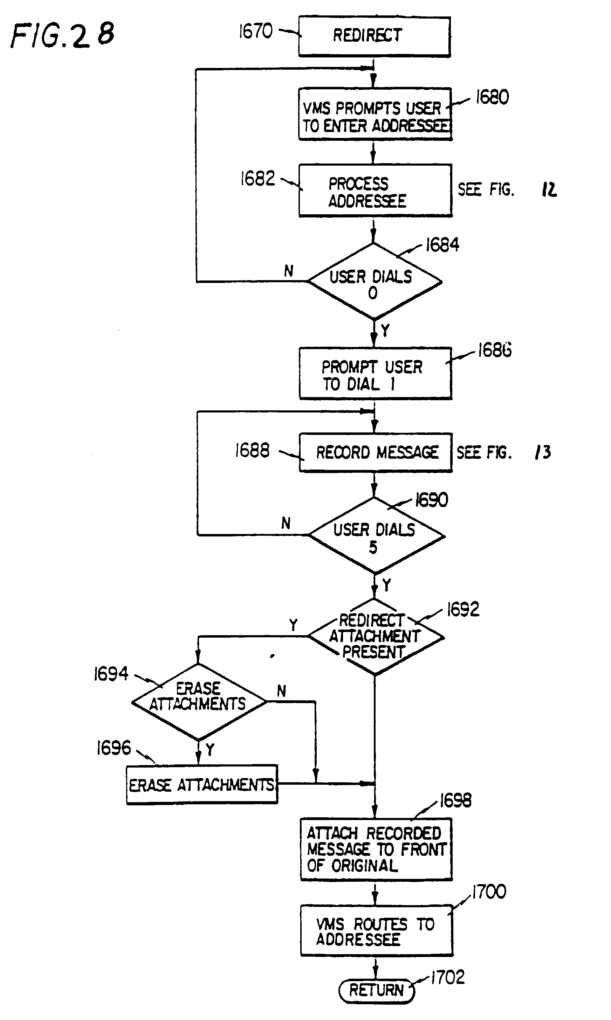

Referring back to the decision block 1522, if the user dials a digit other than "0", the program flows along the "Y" path to a function block 1536 labeled SEND A MESSAGE. The SEND A MESSAGE function block 1536 is operable to allow the user to record a message for deposit in another user's mailbox or for delivery to a non-user, as will be described hereinbelow with reference to FIGURE 28. After a message has been deposited, the program returns to the input of the decision block 1528.

Name Play

After the user has opted to either send a message or to receive a message already deposited in his message address, the program proceeds to a decision block 1538 to decide whether the user desires to activate the NAME PLAY feature. This feature allows the user to listen to the name of the message originator in the message originator's own voice. The message originator's name is prerecorded by the originator-user himself for retrieval with each message that the originator deposits in a recipient's message address. When a message is retrieved from a user's message address, the message begins with the name of the originator and then proceeds to the remaining text of the original message. For example, a user retrieving a message would hear "Hi, this is John Doe" followed by the full text of the message. This feature allows the user to determine if he wants to hear the remaining portion of the message or to save that message and go on to another message. In addition, this feature allows the user to skip through a plurality of messages that may be in his message address and only listen to those messages by a particular originator. An important aspect of this feature is that the originator's name is voiced by the originator himself. This provides both a more humanized greeting than the voice of VMS itself and an aural recognition of the originator. This aural recognition permits a user to terminate the message merely by the sound of the originator's voice before the entire name is heard. It should be understood that once the originator-user deposits his name in the user's data base, this feature is available to all recipients of messages from the originator-user that have the NAME PLAY feature available in their C.O.S.

If the NAME PLAY feature is activated, the program flows along the "Y" path to a decision block 1540. The decision block 1540 inquires as to whether a NAME PLAY C.O.S. is activated. If the C.O.S. is activated, the program flows along the "Y" path to a decision block 1542 to decide whether the NAME PLAY feature is enabled or not. If the NAME PLAY feature is enabled, the program flows along the "Y" path to a function block 1544 that turns off the NAME PLAY feature and then returns to the main program. If the NAME PLAY feature is not enabled, the program flows along the "N" path to a function block 1548 that turns on the NAME PLAY feature and then returns to the main program. If the NAME PLAY C.O.S. has not been activated, the decision block 1540 returns to the main program thus preventing a particular user that has not purchased this C.O.S. from accessing this feature. As described hereinabove, a particular C.O.S. must be activated from the central office and not by a particular user.

Name Record

If the user having the NAME PLAY feature in his C.O.S. does not request the feature, the program proceeds to a decision block 1550. The decision block 1550 decides whether the user has requested a feature termed NAME RECORD. NAME RECORD is the step whereby a user's name is deposited in the VMS memory banks for transmittal with each of the user's deposited messages. If the user requests the NAME RECORD feature, the program flows along the "Y" path to a decision block 1552 that decides whether the NAME PLAY C.O.S. is activated. If this C.O.S. is not activated, the program flows along the "N" path and returns to the main program and if this C.O.S. is activated, the program flows along the "Y" path to a function block 1554 wherein VMS prompts the user to record his name. The program then flows to a function block 1556 where the user dials a "1" and then to a function block 1558 where the user speaks his name. It should be understood that the user can introduce any message he desires at this point within reasonable limits depending upon his particular requirements, that is, it does not necessarily have to be the user's name. After the user has deposited his name and/or message, the program flows to a function block 1560 where the user dials a "5" to advance the program to a function block 1562 where the VMS stores the spoken name and/or address in the user's data base. The program then returns to the main program at the "N" path of the decision block 1550.

At certain times, a particular user may not desire to listen to the spoken name of each of the message originators that has deposited messages in the user's mailbox. This is the purpose of the toggle operation of the function blocks 1544 and 1548, namely, the user can turn off this function if he so desires. It should be understood that when the NAME PLAY feature is enabled, a user must listen to at least one name before he can terminate this feature. However, normally the system is intiated in the disabled mode such that a user must actively enable the feature to have it present.

### Group Codes

If the NAME RECORD feature is not selected, the program flows from the decision block 1550 along the "N" path to a decision block 1564. The decision block 1564 decides whether a user has dialed the command for GROUP CODES. If the user has requested GROUP CODES, the program flows along the "Y" path to a function block 1566 to a USER CHANGEABLE GROUP CODE feature that is described hereinbelow with reference to FIGURE 31. The program then returns to the main program.

### Enter New I.D.

If the user has not dialed the command for GROUP CODES, the program flows along the "N" path to a decision block 1568. The decision block 1568 decides whether the user had dialed the SFC "056". If the user has dialed this SFC, the program flows along the "Y" path and returns to the input of the function block 1520 to reprocess the user I. D. The purpose of the decision block 1568 is to allow a user the option to enter a new I.D. without having to exit the program, terminate the telephone connection and reaccess the VMS. The primary purpose for this feature is for users who have a number of different addresses to access a different address without having to disconnect and reconnect to VMS. One reason for a user having a number of different addresses is to posses addresses that are not listed in the general directory, thereby affording the user the luxury of a "private" line. This is similar to having an unlisted phone number for a separate phone in an office.

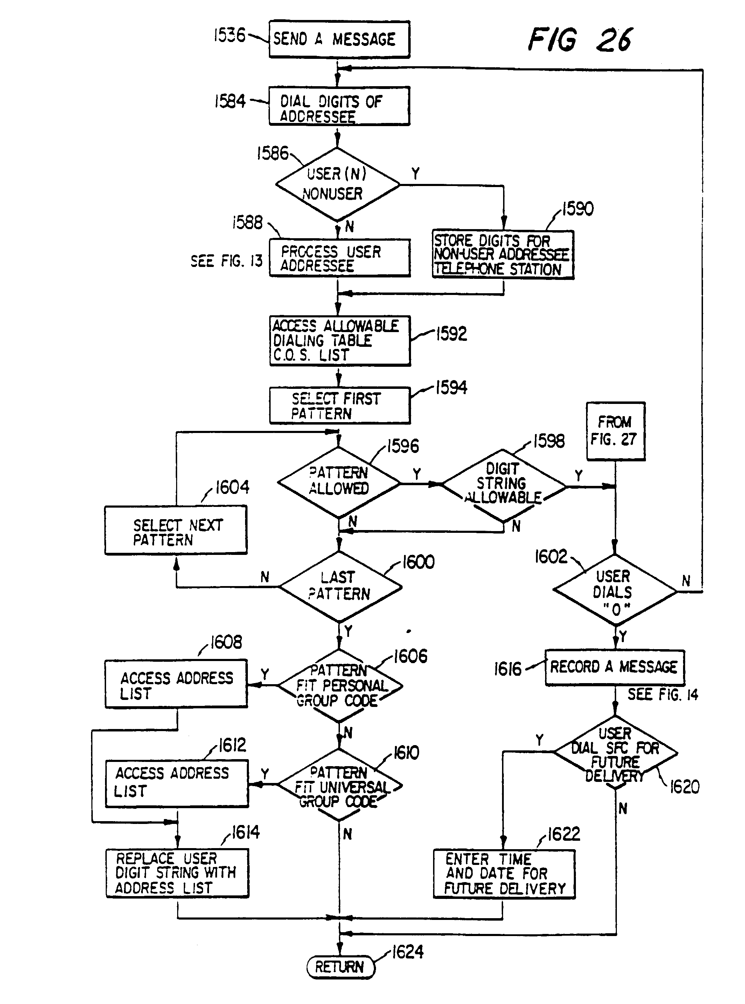

If the user does not desire to enter a new user I.D., the program then flows along the "N" path to a decision block 1570. The decision block 1570 decides whether the user has dialed the SFC "057". If the user has dialed this SFC, the program flows along the "Y" path to a function block 1572 that is a subroutine for retrieving the address list that was entered by the user while he was sending his previous message. This address is used in sending the next message. This allows a user to send another message to the previous addressee or even a group of addressees without having to reenter an address. After the address list has been retrieved, the program proceeds to a function block 1574 which routes the program into the SEND A MESSAGE program of FIGURE 26, as will be described hereinbelow.

If the user has not dialed the SFC for the address retrieval feature, the program flows along the "N" path to a decision block 1576. The decision block 1576 decides whether the user has dialed the SFC "054". This SFC is for inputting a new password for later processing in the decision block 1522 and the function blocks 1524 and 1526. If a new password is desired, the program proceeds along the "Y" path to a function block 1578 wherein VMS requests a new password from the user and then proceeds to a function block 1580 where the user inputs the new password which is stored in VMS. The program then returns to the main program at the "N" path of the decision block 1576 which would be followed if the SFC for the new password were not dialed. The program of FIGURE 25 then proceeds to a return block 1582 to return to the main program for the system.

### Address Information Response

When an address is entered by a user, the system performs a simple format check on the address entered to decide whether the address is proper. Once the system decides the validity of the address and the nature of the address, a feature termed ADDRESS INFORMATION RESPONSE (AIR) is utilized by the system. AIR provides two types of enhanced response to an entered address. The first type is a set of canned phrases which provide additional information about the type of addresses. Without these features, the system responds to an entered address as follows. "The number you dialed is [spoken digits]." This CVM is replaced with the AIR feature by four different types depending on the address type as interpreted by the system. The types are users, non-users, networks and group codes. The four CVMs are as follows:

(a) "The user address you dialed is [address]."
(b) "The non-user telephone number you, dialed is [digits]."
(c) "The network address you dialed is [digits]."
(d) "The group code you dialed is [digits]."

The second type of AIR applies only to user addresses; it is an address response which includes the spoken name of the user being addressed. In this case, the CVM in (a) is changed to "The user address you dialed is for [user name]." In the present invention, both types of response are used because there is a possibility that some users will not have their names recorded in the user data base. This feature is similar to the NAMEPLAY feature described hereinabove with reference to FIGURE 27.

## Claims

1. An electronic communication message system for being coupled to a private branch exchange (12) or central office (22), for receiving, storing and forwarding information from a user's telephone facilities (18) comprising:

   electronic digital processing means (70, 100) for controlling the operation of the message system;
   digital memory means (64, 120) controlled by said electronic digital signal processing means (70, 100) for storing digital representations of the information;
   means (60) for enabling access to the message system through signals transmitted from a user's telephone facilities (18);
   means (16) for receiving information transmitted in analog format from the user's telephone facility (18);
   first means (50, 134, 610) for storing in said digital memory means (64, 120) digital representations of a first portion of the analog information received from the user's telephone facility (18), said first portion containing information to be routed to a selected recipient's telephone station; and
   second means (164, 140, 130, 134, 606) for storing in said digital memory means (64, 120) digital representations of a second portion of the analog information received from the user's telephone facilities (18), said second portion containing information defining route data associated with the first portion;

   characterised in that said system further includes:

   identifying means (70, 72, 76) for storing digital representations of a unique analog identifier pre-recorded by and associated with a particular originating user for identifying analog information originated by the originating user;
   means (100, 110) for accessing said stored digital representations of said first portion associated with the particular route data and with said associated identifier;
   means (166) for reproducing said first portion and the associated identifier in analog format from said stored digital representations; and
   means (156) for sequentially transmitting said reproduced analog information and associated identifier to said selected recipients's telephone station, said reproduced identifier preceding said reproduced analog information.

2. The message system for receiving, storing and forwarding information of Claim 1 wherein said unique analog identifier is comprised of the name of said originating user voiced by said originating user.

3. The message system for receiving, storing and forwarding analog information of Claim 1 further comprising:

   means (100, 110, 114, 112) for storing digital representations of the time and date of said originating user's input of said first portion;
   means (150) for converting said digital representations of said time and date to an audio message voiced in a nondescript voice; and
   means (154, 156, 158) for transmitting said converted time and date to said selected recipient preceding the corresponding first portion.

4. The message system for receiving, storing and forwarding analog information of Claim 1 further comprising:

   means (100, 110, 114) for accessing digital representations of a pre-stored general audio message from said memory means;

means (150) for reproducing said general audio message in analog format from said stored digital representations; and

transmitting said reproduced general audio message to each of the users upon access to the message system.

5. The message system for receiving, storing and forwarding analog information of claim 1 wherein said means (60) for enabling access comprises means for comparing a unique code stored in said digital memory means (64, 120) with an identification code of a user transmitted message from a user's telephone facility (18) to identify the user and to allow user access to the message system.

6. The message system for receiving, storing and forwarding analog information of Claim 5 further comprising means (100, 110, 114) for altering said stored unique code by the user associated with said unique code through analog signals transmitted from the user's telephone facility (18).

7. An electronic communication message system for connection to a private branch exchange telephone facility for use in facilitating communications between users of the private branch exchange, comprising:

an electronic digital signal processing means (70, 100) for controlling the operation of the message system;

means (60) for enabling an audio message originator to access the message system through a signal transmitted to said electronic digital signal processing means (70, 100) from a telephone unit (28) of the private branch exchange (12);

digital memory means (64, 120) for storing digital representations of an audio message originating from a telephone unit (28) of the private branch exchange (12);

means (100, 110) for selecting at least one addressee to receive the audio message;

means (60) for accessing said message addressee's telephone unit connected to the private branch exchange in response to the selected message addressee,

means (150) for reproducing the audio message from the stored digital representations; and

means (154, 156, 158) for transmitting the reproduced audio message to the addressed telephone unit,

characterised in that the system further includes:

means (100, 110, 112) for accessing pre-stored digital representations of an identifying audio message pre-recorded by said audio message originator, said identifying audio message being for identifying audio messages originated by said audio message originator;

means (130, 136, 138, 150) for reproducing said identifying audio message from the digital representations; and

means (154, 156, 158) for transmitting said reproduced identifying audio message to the addressed telephone unit preceding said audio message.

**Patentansprüche**

1. Elektronisches Nachrichtenübermittlungssystem zum Anschluß an eine private Vermittlungsstelle (12) oder ein Vermittlungsamt (22), um Informationen von einer Telefonanlage (18) eines Benutzers zu empfangen, zu speichern und weiterzuleiten, mit

einer elektronischen digitalen Verarbeitungseinrichtung (70, 100), um den Betrieb des Nachrichtensystems zu steuern;

digitalen Speichereinrichtungen (64, 120), die durch die elektronische digitale Signalverarbeitungseinrichtung (70, 100) gesteuert sind, um digitale Darstellungen der Information zu speichern;

einer Einrichtung (60), um den Zugang zu dem Nachrichtensystem durch von einer Telefonanlage (18) eines Benutzers ausgesendete Signale zu ermöglichen;

einer Einrichtung (16), um von der Telefonanlage (18) eines Benutzers in analogem Format ausgesendete Information zu empfangen;

ersten Einrichtungen (50, 134, 610), um in den digitalen Speichereinrichtungen (64, 120) digitale Darstellungen eines ersten Abschnitts von der Telefonanlage (18) eines Benutzers empfangener analoger Information zu speichern, wobei der erste Abschnitt Information enthält, die zu einer Telefonanlage (18) eines ausgewählten Empfängers weiterzuleiten ist;

zweiten Einrichtungen (164, 140, 130, 134, 606), um in den digitalen Speichereinrichtungen (64, 120) digitale Darstellungen eines zweiten Abschnitts von der Telefonanlage (18) eines Benutzers empfangener analoger Information zu speichern, wobei der zweite Abschnitt Information enthält, die zu dem ersten Abschnitt gehörende Pfaddaten definieren;

dadurch gekennzeichnet, daß das System des weiteren

Identifizierungseinrichtungen (70, 72, 76), um digitale Darstellungen einer einzigartigen analogen Kennung zu speichern, die von einem bestimmten einleitenden Benutzer vorher aufgezeichnet wird und mit diesem verbunden ist, um analoge Information zu identifizieren, die von dem einleitenden Benutzer ausgeht;

Einrichtungen (100, 110), um auf die gespeicherten digitalen Darstellungen des ersten Abschnittes zuzugreifen, die mit den bestimmten Pfaddaten und mit der zugehörigen Kennung verbunden sind;

eine Einrichtung (166), um den ersten Abschnitt und die zugehörige Kennung in analogem Format aus den gespeicherten digitalen Darstellungen wiederzugeben; und

eine Einrichtung (156) aufweist, um nacheinander die wiedergegebene analoge Information und die zugehörige Kennung an die Telefonstelle des ausgewählten Empfängers zu senden, wobei die wiedergegebene Kennung der wiedergegebenen analogen Information vorangeht.

2. Das Nachrichtensystem, um Information zu empfangen, zu speichern und weiterzuleiten, nach Anspruch 1, bei dem die einzigartige analoge Kennung aus dem Namen des einleitenden Benutzers gebildet ist, den der einleitende Benutzer ausspricht.

3. Das Nachrichtensystem, um analoge Information zu empfangen, zu speichern und weiterzuleiten, nach Anspruch 1, das des weiteren

Einrichtungen (100, 110, 114, 112), um digitale Darstellungen der Zeit und des Datums der Eingabe des einleitenden Benutzers des ersten Abschnitts zu speichern;

eine Einrichtung (150), um die digitalen Darstellungen der Zeit und des Datums in eine Audionachricht umzuwandeln, die von einer unbeschreibbaren Stimme ausgesprochen wird; und

Einrichtungen (154, 156, 158) aufweist, um die umgewandelte Zeit und das umgewandelte Datum an den ausgewählten Empfänger vor dem entsprechenden ersten Abschnitt auszusenden.

4. Das Nachrichtensystem, um analoge Information zu empfangen, zu speichern und weiterzuleiten, nach Anspruch 1, das des weiteren Einrichtungen (100, 110, 114), um auf digitale Darstellungen einer vorher gespeicherten allgemeinen Audionachricht aus den Speichereinrichtungen zuzugreifen;

Einrichtungen (150) aufweist, um die vorher gespeicherte allgemeine Audionachricht in analogem Format aus den gespeicherten digitalen Darstellungen wiederzugeben; und

die wiedergegebene allgemeine Audionachricht an jeden der Benutzer beim Zugriff auf das Nachrichtensystem aussendet.

5. Das Nachrichtensystem, um analoge Information zu empfangen, zu speichern und weiterzuleiten, nach Anspruch 1, bei dem die Einrichtung (60), um den Zugang zu ermöglichen, eine Einrichtung aufweist, um einen einzigartigen Code, der in der digitalen Speichereinrichtung (64, 120) gespeichert ist, mit einem von einem Benutzer von einer Telefonanlage (18) eines Benutzer ausgesendeten Identifizierungscode zu vergleichen, um den Benutzer zu identifizieren, und um dem Benutzer Zugang zu dem Nachrichtensystem zu gestatten.

**6.** Das Nachrichtensystem, um analoge Information zu empfangen, zu speichern und weiterzuleiten, nach Anspruch 5, das des weiteren Einrichtungen (100, 110, 114) aufweist, um den einzigartigen gespeicherten Code durch den mit dem einzigartigen Code verbundenen Benutzer durch von der Telefonanlage (18) eines Benutzers ausgesendete analoge Signale zu verändern.

**7.** Elektronisches Nachrichtenübermittlungssystem zum Anschluß an eine private Vermittlungsanlage, zur Verwendung beim Ermöglichen von Übermittlungen zwischen Benutzern der privaten Vermittlungsanlage, mit einer elektronischen digitalen Signalverarbeitungseinrichtung (70, 100), um den Betrieb des Nachrichtensystems zu steuern;

einer Einrichtung (60), um dem Sprecher einer Audionachricht Zugang zu dem Nachrichtensystem durch ein von einem Telefonapparat (28) der privaten Vermittlungsanlage (12) an die elektronische digitale Signalverarbeitungseinrichtung (70, 100) gesendetes Signal zu ermöglichen;

digitalen Speichereinrichtungen (64, 120), um digitale Darstellungen einer von einem Telefonapparat (28) der privaten Vermittlungsanlage (12) stammenden Audionachricht zu speichern;

Einrichtungen (199, 110), um wenigstens einen Adressaten zum Empfangen der Audionachricht auszuwählen;

einer Einrichtung (60), um auf den mit der privaten Vermittlungsanlage (12) verbundenen Telefonapparat (28) des Adressaten in Abhängigkeit von dem ausgewählten Nachrichtenadressaten zuzugreifen;

einer Einrichtung (150), um die Audionachricht aus den gespeicherten digitalen Darstellungen wiederzugeben; und

Einrichtungen (154, 156, 158), um die wiedergegebene Audionachricht an den adressierten Telefonapparat auszusenden;

dadurch gekennzeichnet, daß das System des weiteren

Einrichtungen (100, 110, 112), um auf digitale Darstellungen einer vorher gespeicherten identifizierenden Audionachricht zuzugreifen, die von dem Audionachrichtensprecher vorher aufgezeichnet wird, wobei die identifizierende Audionachricht zur Indentifikation von Audionachrichten dient, die von dem Audionachrichtensprecher stammen;

Einrichtungen (130, 236, 138, 150), um die identifizierende Audionachricht aus den digitalen Darstellungen wiederzugeben; und

Einrichtungen (154, 156, 158) aufweist, um die wiedergegebene identifizierende Audionachricht an den adressierten Telefonapparat vor der Audionachricht auszusenden.

## Revendications

**1.** Système de messagerie électronique destiné être couplé à un central téléphonique d'abonné (12) ou à un centre téléphonique (22), pour la réception, la mémorisation et l'envoi d'information à partir d'installations téléphoniques d'un usager (18), comprenant :

des moyens de traitement numérique électronique (70, 100) pour la commande du fonctionnement du système de messagerie,

des moyens de mémorisation numérique (64, 120) commandés par ces moyens de traitement numérique électronique de signal (70, 100) pour la mémorisation de représentations numériques de l'information,

des moyens (60) pour autoriser l'accès au système de messagerie par l'intermédiaire de signaux émis par des installations téléphoniques d'un usager (18),

des moyens (16) pour la réception d'information émise en format analogique par l'installation téléphonique de l'usager (18),

des premiers moyens (50, 134, 610) pour la mémorisation, dans les moyens de mémorisation numérique (64, 120), de représentations numériques d'une première partie de l'information analogique reçue de l'installation téléphonique de l'usager (18), cette première partie contenant de l'information à acheminer au poste téléphonique d'un destinataire choisi, et

des seconds moyens (164, 140, 130, 134, 606) pour la mémorisation, dans les moyens de mémorisation numérique (64, 120), de représentations numériques d'une seconde partie de l'information analogique reçue des installations téléphoniques de l'usager (18), cette seconde partie contenant de l'information définissant des données d'itinéraire associées à la première partie,

caractérisé par le fait qu'il comporte en outre :

des moyens d'identification (70, 72, 76) pour la mémorisation de représentations numériques d'un identificateur numérique unique préenregistré et associé à un usager émetteur particulier pour l'identification d'information analogique émise par cet usager,

des moyens (100, 110) pour accéder aux représentations numériques mémorisées de la première partie associée aux données particulières d'itinéraire et à l'identificateur associé,

des moyens (166) pour la reproduction de la première partie et de l'identificateur associé en format analogique à partir des représentations numériques mémorisées, et

des moyens (156) pour la transmission successive de l'information analogique et de l'identificateur associé reproduits au poste téléphonique du destinataire choisi, l'identificateur reproduit précédant l'information analogique reproduite.

2. Système de messagerie pour la réception, la mémorisation et l'envoi d'information selon la revendication 1, dans lequel l'identificateur analogique unique est constitué du nom de l'usager émetteur exprimé par celui-ci.

3. Système de messagerie pour la réception, la mémorisation et l'envoi d'information analogique selon la revendication 1, comprenant en outre :

des moyens (100, 110, 114, 112) pour la mémorisation de représentations numériques de l'heure et de la date de l'entrée de la première partie pour l'usager émetteur,

des moyens (150) pour la conversion des représentations numériques de l'heure et de la date en un message audio exprimé d'une voix indéfinissable, et

des moyens (154, 156, 158) pour la transmission de l'heure et de la date converties au destinataire choisi, précédant la première partie correspondante.

4. Système de messagerie pour la réception, la mémorisation et l'envoi d'information analogique selon la revendication 1, comprenant en outre :

des moyens (100, 110, 114) pour accéder, à partir des moyens de mémorisation, à des représentations numériques d'un message audio général pré-mémorisé,

des moyens (150) pour la reproduction de ce message audio général en format analogique à partir des représentations numériques mémorisées, et

la transmission du message audio général reproduit à chacun des usagers sur accès au système de messagerie.

5. Système de messagerie pour la réception, la mémorisation et l'envoi d'information analogique selon la revendication 1, dans lequel les moyens d'autorisation d'accès (60) comprennent des moyens de comparaison d'un code unique mémorisé dans les moyens de mémorisation numérique (64, 120) à un code d'identification d'un message émis par un usager à partir de son installation téléphonique d'usager (18) pour identifier l'usager et permettre l'accès de celui-ci au système de messagerie.

**6.** Système de messagerie pour la réception, la mémorisation et l'envoi d'information analogique selon la revendication 5, comprenant en outre des moyens (100, 110, 114) pour la modification du code unique mémorisé par l'usager associé à ce code unique par l'intermédiaire de signaux analogiques émis par l'installation téléphonique de l'usager (18).

**7.** Système de messagerie électronique destiné à être connecté à une installation téléphonique de central d'abonné et à faciliter les communications entre les usagers de ce central comprenant :

des moyens de traitement numérique électronique de signal (70, 100) pour la commande du fonctionnement du système de messagerie,

des moyens (60) pour autoriser un émetteur de message audio à accéder au système de messagerie par l'intermédiaire d'un signal transmis aux moyens de traitement numérique électronique de signal (70, 100) à partir d'un élément téléphonique du central d'abonné (12),

des moyens de mémorisation numérique (64, 120) pour la mémorisation de représentations numériques d'un message audio provenant d'un élément téléphonique (28) du central d'abonné (12),

des moyens (100, 110) pour choisir au moins un destinataire destiné à recevoir ce message audio,

des moyens (60) pour accéder à l'élément téléphonique du destinataire du message relié au central d'abonné en réponse au destinataire choisi du message,

des moyens (150) pour la reproduction du message audio à partir des représentations numériques mémorisées, et

des moyens (154, 156, 158) pour la transmission du message audio reproduit à l'élément téléphonique du destinataire,

caractérisé par le fait qu'il comprend en outre :

des moyens (100, 110, 112) pour accéder à des représentations numériques pré-mémorisées d'un message audio d'identification préenregistré par ledit émetteur de message, ledit message audio d'identification servant à identifier des messages audio provenant dudit émetteur de message,

des moyens (130, 136, 138, 150) pour la reproduction de ce message audio d'identification à partir des représentations numériques, et

des moyens (154, 156, 158) pour la transmission du message audio d'identification reproduit à l'élément téléphonique du destinataire précédant ledit message audio.

FIG. 1

FIG. 2

FIG. 3

FIG. 4

- SIM
- SBC COMPUTER — 70
- MEMORY — 72
- COMMUN. PORT INTERFACE — 74
- DISK ADAPTER — 76
- DISK ADAPTER — 78
- BLOCK TRANSFER BUS INTERFACE — 80
- MULTIBUS

→ TO STORAGE BUSSES
→ TO ADMINISTRATIVE SUBSYSTEM
→ TO COMMUNICATION PORT DRIVERS

62A

FIG. 5

- COMMUNICATION PORT INTERFACE (OCB) — 74
- TO MULTIBUS
- 88
- 90A
- 90D

PORT DRIVER MODULE

EXPANDER — 94
PORT DRIVER NO. 1 — 92
PORT DRIVER NO. 16 — 92
CODEC — 96
VCA — 98

31

FIG. 6

FIG. 7

FIG. 8

FIG. 9

FIG. 10

FIG. 11

PROCESS AN ADDRESSEE — 606

USER ALLOWED TO RE-DIAL ADDRESSEE

RECORD VOICE MESSAGE — 610

USER DISCOVERS A DIALING ERROR BEFORE DIALING LAST DIGIT

VMS RESPONDS WITH A SINGLE "BEEP-BEEP" — 638

634 — USER DIALS DIGITS FOR ADDRESSEE

536 — USER DIALS "*"

654 — USER DIALS "1".

VMS VALIDATES ADDRESSEE — 640

656 — USER RECORDS VOICE MESSAGE

642 — VALID ? — NO, INVALID

652 — VMS RESPONDS WITH A SINGLE "BEEP-BEEP BEEP"

658 — USER DIALS EOM DIGIT(S) "5", "55" "6", "66".

YES

650 — VMS RESPONDS WITH A SINGLE "BEEP-BEEP"

660 — VMS RESPONDS WITH SINGLE "BEEP"

644 — VMS ACKNOWLEDGES WITH SINGLE "BEEP"

646 — USER DIALS "*", OR "7", (ROTARY)

606 — END ADDRESSEE PROCESSING

USER DISCOVERS A DIALING ERROR AFTER DIALING COMPLETE ADDRESSEE AND RECEIVING ACKNOWLEDGEMENT FROM VMS.

610 — END, RECORD MESSAGE

FIG. 13

FIG. 12

34

FIG. 14

FIG. 16

FIG. 15

FIG. 17

REPLY — 688

USER DIALS 3 DIGIT SFC FOR REPLY — 736

VMS RESPONDS WITH PROGRESS TONE - SINGLE "BEEP" — 738

USER RECORDS REPLY MESSAGE — 740  SEE FIG. 14

END REPLY

## FIG. 18

SAVE

USER DIALS 3 DIGIT SFC FOR SAVE — 742

VMS RESPONDS WITH PROGRESS TONE - SINGLE "BEEP" — 744

END, SAVE

## FIG. 19

INQUIRY — 750

VMS ANSWERS PLAYS CM. — 752

PROCESS USER-I.D. — 754  SEE FIG. 12

USER DIALS INQUIRY SFC — 756

ANY MESSAGES ? — 758   NO → VMS PLAYS CM # 2. — 760 → TO DEPOSIT (OPTIONALLY)

YES

VMS PLAYS CM # 1 — 762

PLAY VOICE MESSAGE — 764  SEE FIG. 15

MORE MESSAGES ? — 766   YES → VMS PLAYS CM # 3 — 770

VMS PLAYS CM # 4 — 768 → TO DEPOSIT (OPTIONALLY)

## FIG. 20

FIG. 21

The figure is a block diagram of VMS System Software (800) and its components:

- 802 — 80/30 ROM RESIDENT PROGRAMS
  - 814 — OPERATING SYSTEM NUCLEUS
  - 816 — BASIC MONITOR
  - 818 — MEMORY LOAD / DUMP
- 804 — 80-30 "SYSTEM SUPPORT" PROGRAMS
  - 820 — SYSTEM MONITOR
  - 822 — OVERLAY MANAGER
  - 824 — MEMORY ALLOCATION MANAGER
- 806 — 80/30 MASTER PROCESSOR UTILITY PRGS.
  - 826 — DATA BASE CREATION
  - 828 — DATA BASE UPDATE
  - 830 — DATA BASE PRINT
  - 832 — MEMORY DUMP ANALYZER
  - 834 — DISK UTILITY PROGRAM
  - 836 — CANNED VOICE MESSAGE (CVM) UTILITY
- 808 — 80/30 MASTER PROCESSOR ONLINE PRGS.
  - 838 — VMS ONLINE INITIALIZER
  - 842 — JOURNAL/ALARM MESSAGE GENERATOR
  - 846 — CRT CONTROL (DEVICE HANDLER)
  - 850 — REPORT GENERATOR PROGRAMS
  - 852 — PORT USAGE REPORT
  - 854 — CALL STATS. REPORT
  - 856 — MESSAGE STATS. REPORT
  - 858 — USER COMMAND USAGE REPORT
  - 859 — DISK STORAGE REPORT
- 810 — 80/30 SLAVE PROCESSOR ONLINE PRGS.
  - 840 — VMS COMMAND PROCESSOR (COMSUP)
  - 844 — PRINTER SPOOLER
  - 848 — LP CONTROL (DEVICE HANDLER)
  - 860 — MESSAGE ROUTER
  - 862 — MESSAGE DISPATCHER
  - 864 — VOICE-DATA CELL ALLOCATOR
  - 866 — MESSAGE STORAGE OVERWRITE PROTECTOR
  - 872 — INTERPROCESSOR EXCHANGE CONTROL
  - 868 — CIRCUIT CONTROL
  - 870 — CALL SCHEDULER
- 812 — 80/30 CALL PROCESSOR ONLINE PRGS.
  - 874 — TRANSACTION TIMER CONTROL
  - 876 — CIRCUIT CONTROL & STATUS
  - 878 — CIRCUIT ADAPTER CONTROL
  - 880 — BLOCK-BUS ADAPTER CONTROL
  - 882 — DISK ADAPTER CONTROL
  - 884 — CALL PROCESSOR INITIALIZER
  - 886 — VMS USER FUNCTION PROCESSORS
  - 888 — INCOMING CALL PROCESSOR
  - 890 — OUTGOING CALL PROCESSOR
  - 896 — MISC SFC PROCESSOR
  - 892 — DELIVERY & INQUIRY PROCESSOR
  - 894 — DEPOSIT PROCESSOR

EP 0 336 524 B2

38

FIG. 22

CALL PROCESSOR
CONTROL AND DATA FLOW

EP 0 336 524 B2

FIG. 23

FIG. 24a

FIG. 24b

TO FIG. 24a

DECODE/ENCODE

DATA OUT

EP 0 336 524 B2

FIG. 24c

EP 0 336 524 B2

FIG.25a

FIG. 25b

FIG 26

1536 — SEND A MESSAGE

1584 — DIAL DIGITS OF ADDRESSEE

1586 — USER (N) NONUSER

SEE FIG. 13

1588 — PROCESS USER ADDRESSEE

1590 — STORE DIGITS FOR NON-USER ADDRESSEE TELEPHONE STATION

1592 — ACCESS ALLOWABLE DIALING TABLE C.O.S. LIST

1594 — SELECT FIRST PATTERN

1596 — PATTERN ALLOWED

1604 — SELECT NEXT PATTERN

1598 — DIGIT STRING ALLOWABLE

FROM FIG. 27

1600 — LAST PATTERN

1602 — USER DIALS "0"

1608 — ACCESS ADDRESS LIST

1606 — PATTERN FIT PERSONAL GROUP CODE

1616 — RECORD A MESSAGE

SEE FIG. 14

1612 — ACCESS ADDRESS LIST

1610 — PATTERN FIT UNIVERSAL GROUP CODE

1620 — USER DIAL SFC FOR FUTURE DELIVERY

1614 — REPLACE USER DIGIT STRING WITH ADDRESS LIST

1622 — ENTER TIME AND DATE FOR FUTURE DELIVERY

1624 — RETURN

46

RECEIVE A MESSAGE — 1530

ANY MESSAGES 1626

VMS PLAYS CVM "NO MESSAGE" — 1628

TO SEND A MESSAGE (OPTICNAL) — 1630

SEE FIG. 26

*FIG. 27a*

USER DIALS 2 — 1632

SELECT FIRST NEW MESSAGE FOR PLAY — 1634

USER DIALS 8 — 1638

SELECT FIRST OLD MESSAGE FOR PLAY — 1640

NAME PLAY C.O.S. ENABLED — 1636

ACCESS USER DATA BASE — 1642

PLAY ORIGINATORS NAME — 1644

CHECK FOR TIME / DATE FEATURE — 1646

PLAY VOICE MESSAGE — 1648   SEE FIG. 15

USER DIALS 77 — 1650

AUTOMATIC VARIABLE TIME SCAN — 1652

29 b

FIG. 27b

```
                    ┌──┐
                    │29│
                    │ b│
                    └┬─┘
                     │
                     ▼           1654
                  ◇───────◇  Y
                 ◇ USER DIALS ◇──────────────┐        1656
                  ◇   7   ◇                   ▼
                  ◇───────◇           ┌──────────────────┐
                     │ N               │ SAVE MESSAGE IN  │
                     │                 │ OLD MESSAGE QUE  │
                     │◄────────────────└──────────────────┘
                     ▼           1658
                  ◇───────◇  Y
                 ◇ USER DIALS ◇──────────────┐        1660
                  ◇   9   ◇                   ▼
                  ◇───────◇           ┌──────────────────┐
                     │ N               │ INCREASE VOLUME  │
                     │◄────────────────└──────────────────┘
                     ▼           1662
                  ◇───────◇  Y
                 ◇ USER DIALS ◇──────────────┐        1664
                  ◇   0   ◇                   ▼
                  ◇───────◇           ┌──────────────────┐
                     │ N               │ REMOVE QUIET TIME│
     ┌───────────────┤◄────────────────└──────────────────┘
     │               ▼           1666
     │            ◇───────◇
     │    N      ◇ PLAYBACK ◇
     └──────────◇ FINISHED  ◇
                 ◇───────◇
                     │ Y
                     ▼           1668
        Y         ◇───────◇
   ┌─────────────◇ USER DIALS ◇
   │              ◇ 021  ◇
1670│             ◇───────◇
   ▼                 │ N
┌──────────┐         ▼           1674
│ REDIRECT │      ◇───────◇  Y
└──────────┘     ◇ USER DIALS ◇──────────────┐     1676
 SEE FIG. 28     ◇  023  ◇                    ▼
                  ◇───────◇          ┌──────────────────┐
                     │               │ VMS PROMPTS      │
                     │               │ DIAL 1,  DIAL    │
                     │               │ 5 FOR REPLY      │
                     │               └────────┬─────────┘
                     │           1678         ▼
                     │               ┌──────────────────┐
                     │               │ SEND REPLY TO    │
                     │               │ ALL USERS THAT   │
                     │               │ RECEIVED ORIGINAL│
                     │               │ MESSAGE          │
                     │               └──────────────────┘
                     ▼◄──────────────────────┘
                 ( RETURN ) ── 1672
```

*FIG.2 8*

1670 —— REDIRECT

VMS PROMPTS USER —— 1680
TO ENTER ADDRESSEE

1682 —— PROCESS
ADDRESSEE      SEE FIG. *12*

1684
N ←—— USER DIALS
0
↓ Y

PROMPT USER —— 1686
TO DIAL 1

1688 —— RECORD MESSAGE   SEE FIG. *13*

1690
N ←—— USER DIALS
5
↓ Y

1692
Y ←—— REDIRECT
ATTACHMENT
PRESENT

1694 —— ERASE
ATTACHMENTS —— N

1696 —— 
ERASE ATTACHMENTS

ATTACH RECORDED —— 1698
MESSAGE TO FRONT
OF ORIGINAL

VMS ROUTES TO —— 1700
ADDRESSEE

RETURN —— 1702

49

## FIG.29

```
USER CHANGEABLE
GROUP CODES ————1566
        │
        ▼
PROMPT USER
TO SELECT WHICH ——1704
GROUP CODE
FOR ADD/
CHANGE/DELETE
        │
        ▼
USER DIALS
A DIGIT TO ——1706
SPECIFY WHICH
LIST TO RETRIEVE
        │
        ▼
VMS RETRIEVES ——1708
LIST FROM USERS
DATA BASE
        │
        ▼
VMS PROMPTS USER
TO SELECT ADD OR
CHANGE FUNCTION ——1710
        │
        ▼
      1712
     USER
Y   SELECTS   N (ADD)
    CHANGE
```

Y branch:

```
VMS PLAYS NAME
OF EACH ADDRESS ——1714
IN GROUP CODE LIST
        │
        ▼
      1717
     DELETE      Y
        │N           │
        ▼            ▼
                   DELETE ——1718
        │◄───────────┘
        ▼
   1720
N  LAST NAME
        Y
```

N (ADD) branch:

```
USER DIALS ADDRESS
1716—— TO ADD TO LIST
        │
        ▼
1724—— VMS PLAYS NAME
        OF ADDRESS
        │
        ▼
1728—— USER DIALS * TO
        ACCEPT ADDRESS
        │
        ▼
1730——
   USER DIALS      N
      #
        Y
```

```
        ▼
   ( RETURN )——1722
```